(19) Europäisches Patentamt

European Patent Office

Office européen des brevets

(11) **EP 0 905 488 A2**

## (12) EUROPEAN PATENT APPLICATION

(43) Date of publication:
31.03.1999 Bulletin 1999/13

(51) Int. Cl.$^6$: **G01F 1/84**

(21) Application number: **98118063.1**

(22) Date of filing: **23.09.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.09.1997 JP 265532/97**
**19.05.1998 JP 136680/98**

(71) Applicant:
**Yokogawa Electric Corporation**
**Tokyo 180-8750 (JP)**

(72) Inventors:
• **Oosawa, Norikazu**
**Musashino-shi, Tokyo 180-8750 (JP)**
• **Kuromori, Kenichi**
**Musashino-shi, Tokyo 180-8750 (JP)**

(74) Representative:
**Henkel, Feiler, Hänzel**
**Möhlstrasse 37**
**81675 München (DE)**

### (54) Coriolis mass flowmeter

(57)     A Coriolis mass flowmeter operated by deforming and vibrating a vibration tube through which a measuring fluid is passed, using a Coriolis force generated by the flow of the measuring fluid and the angular vibration of the vibration tube. In this mass flowmeter, the vibration tube is fixed to the housing at the upstream fixed point and downstream fixed point and the original axis is taken as a straight line connecting these fixed points. The vibration tube is operated so that the tube performs simple harmonic oscillation or circular motion on circumferences at predetermined distances away from each point of the original axis around the original axis taken as the center.

Since the vibration tube oscillates only in the circumferential planes at equal distances from the original axis, the length of the vibration tube does not vary regardless of the position of the tube.

Accordingly, the tensile force in the direction of the axis is always constant.

That is, the leakage of vibration due to the variation in the force in the direction of the axis can be eliminated. Enhanced isolation of vibration makes vibration inside the flowmeter stable and this enables a highly accurate and stable Coriolis mass flowmeter to be achieved.

Specifically, since the Q value of the internal vibration becomes high, a Coriolis mass flowmeter is achieved that is not easily affected by vibration noise, consumes less power, and reduces zero and span changes due to changes in the amount of vibration leakage.

FIG. 6

12:UPSTREAM FIXED POINT
16:VIBRATION SENSOR
15:OSCILLATOR
17:VIBRATION SENSOR
2:FLANGE
FL Flow
2:FLANGE
14:ORIGINAL AXIS
11:VIBRATION TUBE
13:DOWNSTREAM FIXED POINT SENSOR
6:HOUSING

## Description

## BACKGROUND OF THE INVENTION

1. Field of the Invention

The present invention relates to a Coriolis mass flowmeter whose stability, accuracy and resistance against vibration are improved by enhancing isolation of internal vibration.

2. Description of the Prior Art

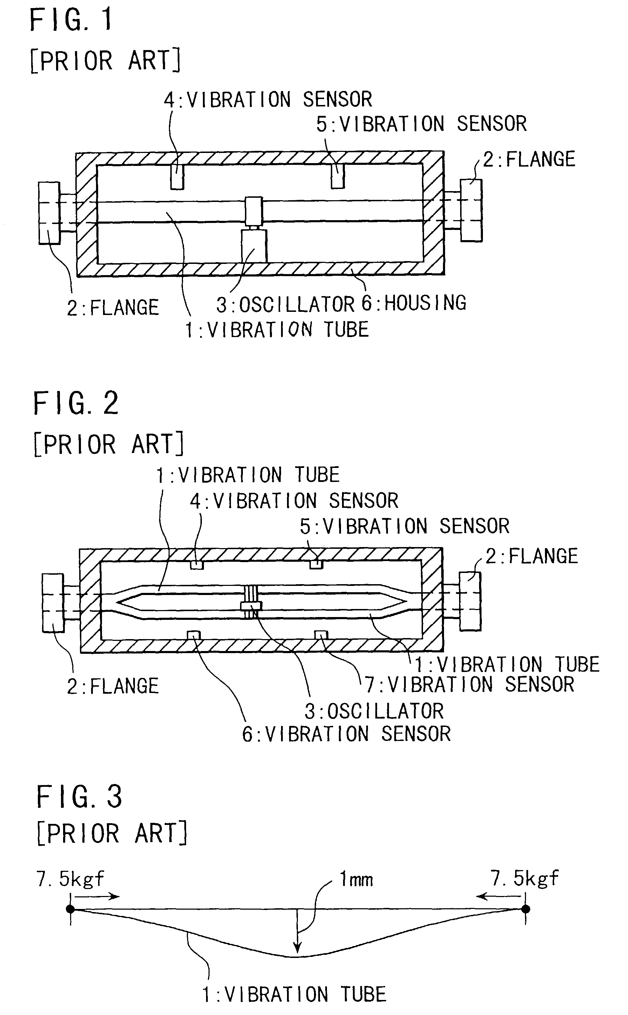

Figure 1 shows a drawing for explaining the configuration of an embodiment in the prior art, which has been used to date. This is indicated, for example, in the embodiment in the prior art disclosed in a publication of unexamined patent applications, Hei No. 6-109512.

In Figure 1, numeral 1 is a vibration tube both ends of which are fixed to flanges 2. Flanges 2 are provided for mounting vibration tube 1 to piping A (not shown).

Numeral 3 is an oscillator provided at the center of vibration tube 1. Numerals 4 and 5 are vibration sensors provided on both sides of the center of vibration tube 1. Numeral 6 shows a housing to which both ends of vibration tube 1 are fixed.

In the above configuration, a measuring fluid is passed through vibration tube 1 and oscillator 3 is driven. Let the angular velocity of oscillator 3 in the direction of vibration be $[\omega]$ and the flow velocity of the measuring fluid be $[V]$ (Hereafter symbols enclosed with [ and ] represent vector quantities), then the following Coriolis force acts:

$$Fc = -2m[\omega] \times [V] \text{ (where, m represents mass)}$$

Thus, by measuring the amplitude of vibration proportional to the Coriolis force, mass flow can be measured.

Figure 2 shows a drawing for explaining the configuration of another embodiment in the prior art, which has been used to date. In this embodiment, vibration tube 1 is a two-tube type.

Although the vibration tube is fixed at both its ends in a general one-straight-tube Coriolis mass flowmeter as shown in Figure 1, for limited size flowmeters, the end points cannot be completely fixed and so vibrate slightly.

One cause of the generation of vibration is the following.

If vibration tube 1 through which a measuring fluid is passed is deformed as shown in Figure 3 (approximately first-order mode resonance state), since the length of the tube becomes longer due to deformation, a tensile force is generated in the direction of the axis of the vibration tube.

For example, if the center part of vibration tube 1, which is a stainless steel tube of diameter 9.6 mm, wall thickness 0.91 mm, and length 400 mm, is deformed by 1 mm, a tensile force of 7.5 kgf is generated in the axial direction as shown in Figure 3.

If vibration tube 1 is oscillated in the first-order resonance mode, the tensile force becomes maximum at the maximum positive and negative deformation and becomes minimum, zero, at the fundamental shape without deformation.

The tensile force reaches both its maximum and minimum two times in an oscillatory vibration period. That is, the tensile force in the axial direction of vibration tube 1 is generated at twice the frequency of the excitation frequency. If there is leakage of vibration due to this tensile force, the following problems arise:

If isolation of vibration is insufficient,

(1) since the Q value becomes lower, the internal vibration becomes unstable and the meter is likely to be affected by unwanted vibration noise other than exciting oscillation;
(2) much energy becomes necessary for excitation and so power consumption increases; and
(3) the extent of vibration leakage varies greatly depending on environmental changes and/or external causes, such as installation method, piping stress, temperatures, etc., and thus the vibration state of the vibration tube also varies and the zero and span are likely to change.

That is, Coriolis flowmeters are likely to be made unstable, less resistant to vibration, and less accurate by these environmental changes and/or external causes.

While, in the embodiment in the prior art shown in Figure 2, a construction not likely to leak vibrations is obtained according to the tuning fork principle as shown in Figures 4 and 5. This is because the forces cancel each other out at the branching points when there are two vibration tubes 1 vibrating in the opposite direction to each other.

However, a structure having one vibration tube without branching point cannot be employed.

## SUMMARY OF THE INVENTION

The present invention solves the above problems.
The objective of the present invention is to provide a Coriolis mass flowmeter which has improved stability, accuracy and resistance against vibration by enhancing isolation of internal vibration.

## BRIEF DESCRIPTION OF THE DRAWINGS

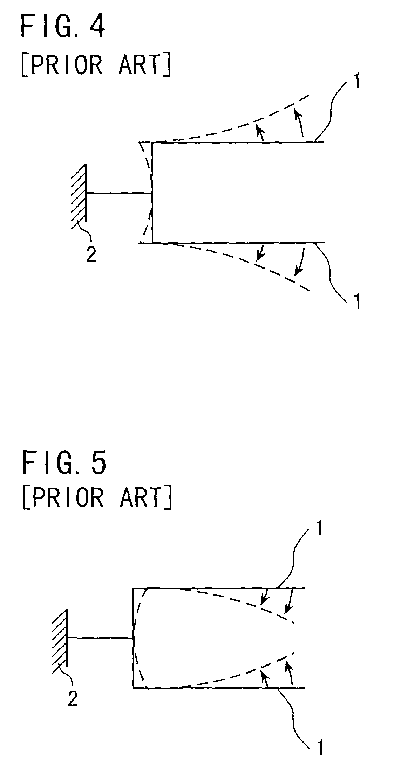

Figure 1 shows a drawing for explaining the configuration of an embodiment in the prior art, which has been used to date. Figure 2 shows a drawing for explaining the configuration of another embodiment in the prior art, which has been used to date. Figure 3 is a drawing for explaining operations in the embodiment shown in Figure 1. Figures 4 and 5 are drawings for explaining operations in the embodiment shown in Figure 2, respectively.

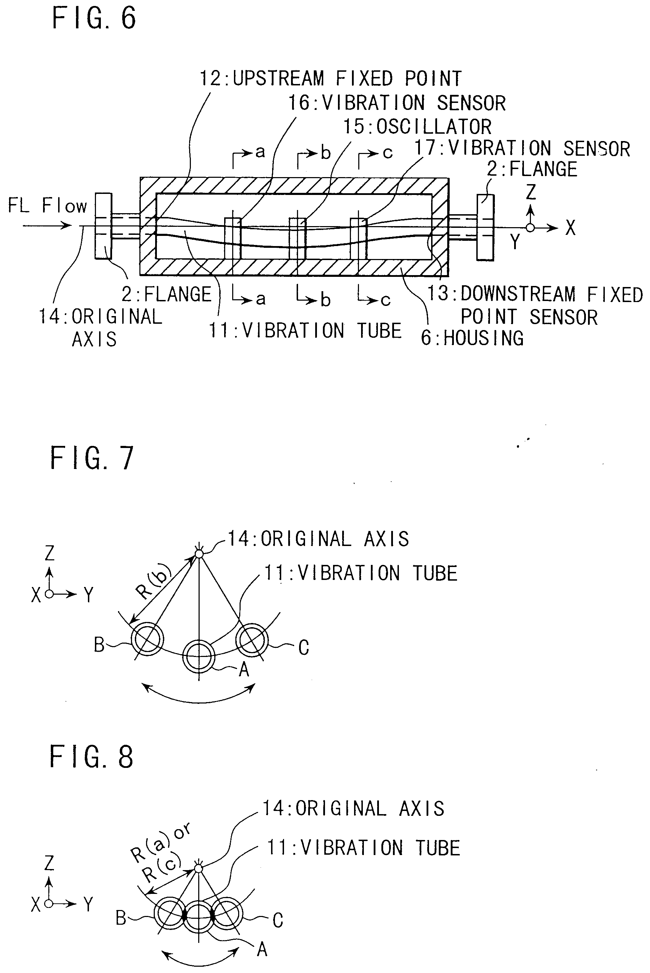

Figure 6 shows a drawing for explaining the configuration of the essential parts of the first embodiment of the present invention.

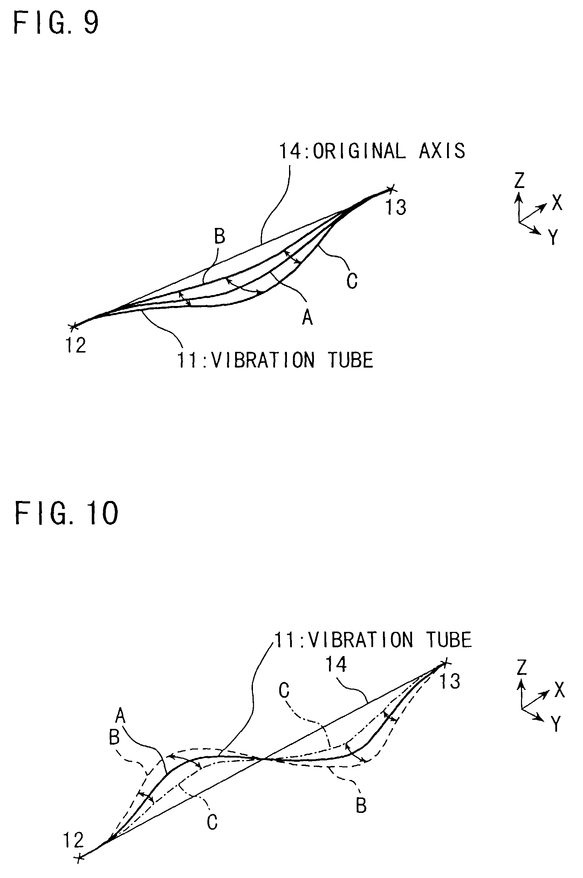

Figure 7 is a drawing for explaining operations in the embodiment shown in Figure 6. Figures 8 and 9 are also drawings for explaining operations in the embodiment shown in Figure 6, respectively.
Figure 10 shows a perspective view for explaining the essential parts of the second embodiment of the present invention.

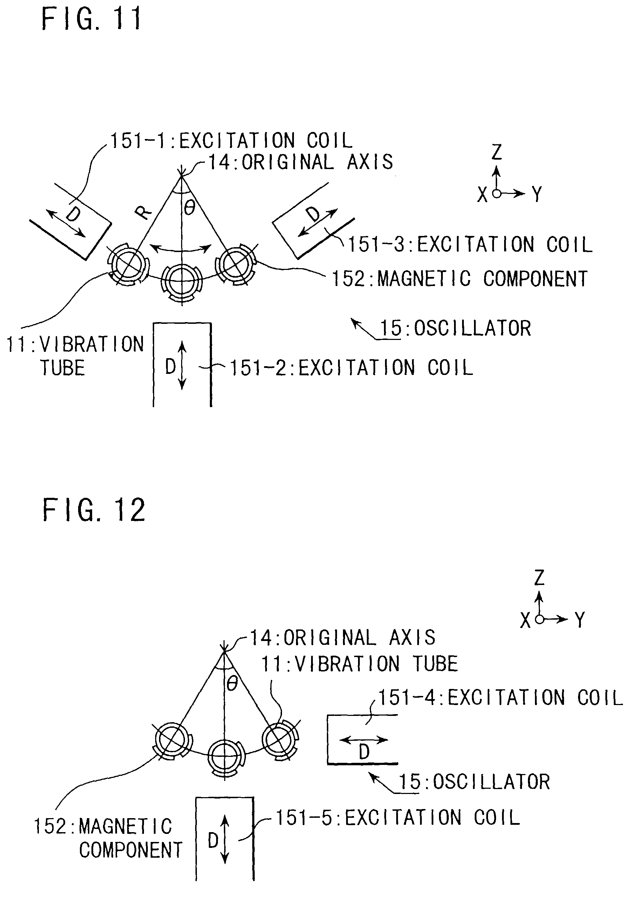

Figure 11 shows a drawing for explaining the configuration of the essential parts of the third embodiment of the present invention.
Figure 12 shows a drawing for explaining the configuration of the essential parts of the fourth embodiment of the present invention.

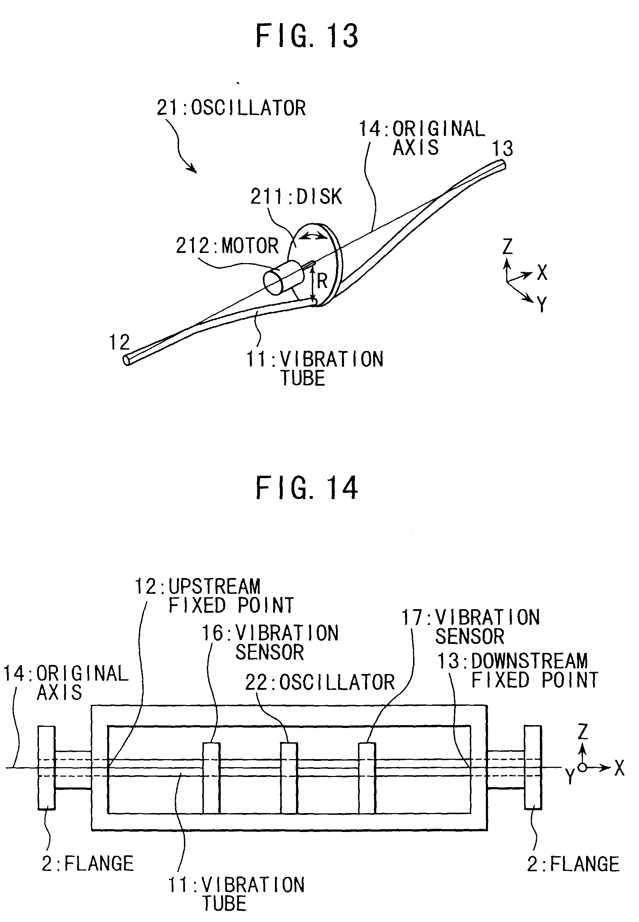

Figure 13 shows a perspective view for explaining the essential parts of the fifth embodiment of the present invention.
Figure 14 shows a drawing for explaining the configuration of the essential parts of the sixth embodiment of the present invention.

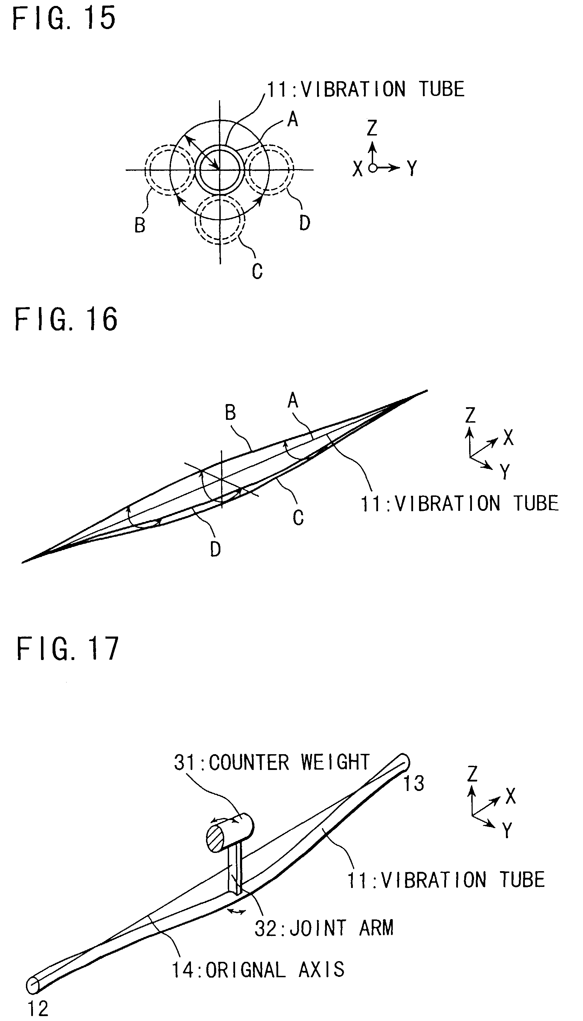

Figure 15 is a drawing for explaining operations in the embodiment shown in Figure 14. Figure 16 is also a drawing for explaining operations in the embodiment shown in Figure 14.

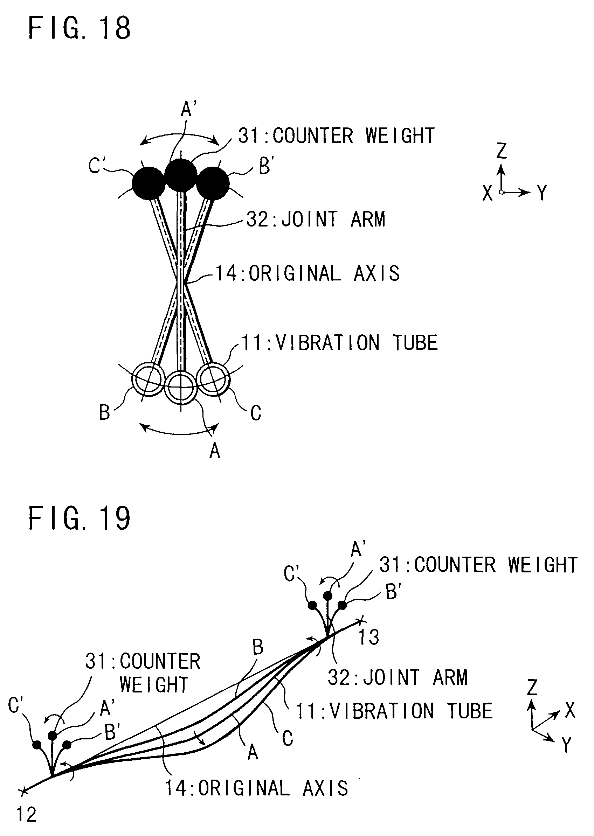

Figure 17 shows a perspective view for explaining the essential parts of the seventh embodiment of the present invention. Figure 18 is a cross sectional view of the embodiment shown in Figure 17.
Figure 19 shows a drawing for explaining the configuration of the essential parts of the eighth embodiment of the present invention.

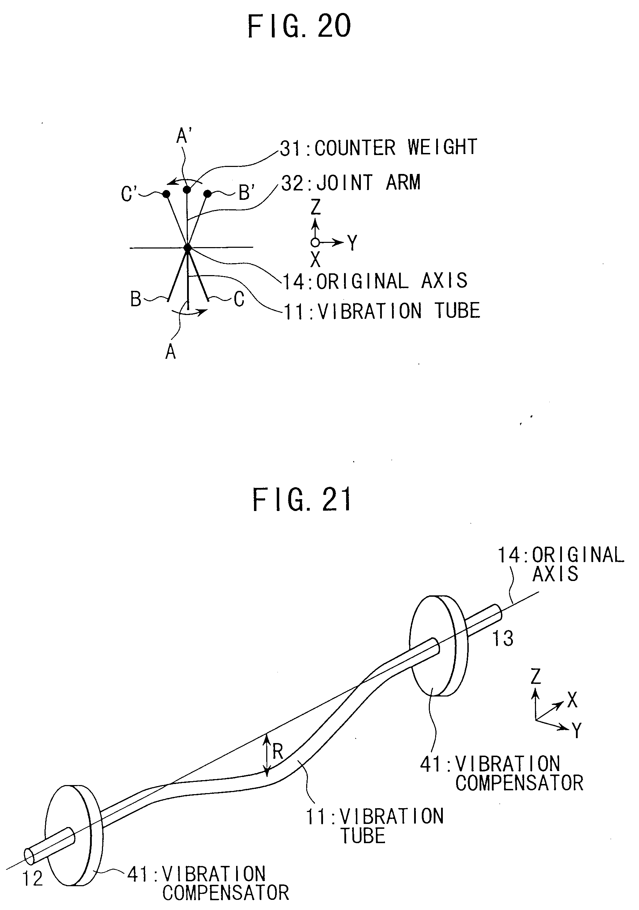

Figure 20 is a side view of the embodiment shown in Figure 19.

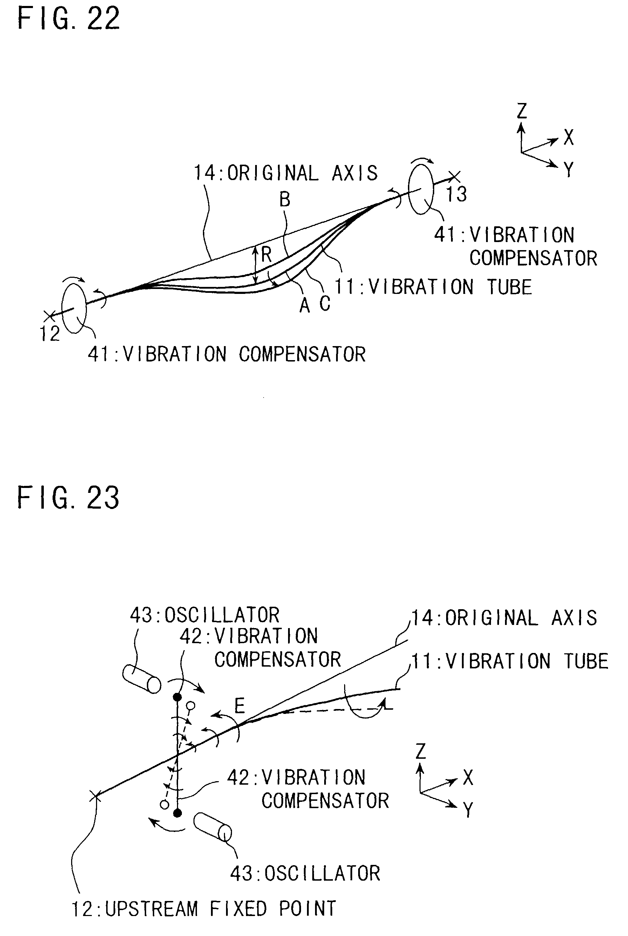

Figure 21 shows a perspective view for explaining the essential parts of the ninth embodiment of the present invention. Figure 22 is a drawing for explaining operations in the embodiment shown in Figure 21.
Figure 23 shows a drawing for explaining the configuration of the essential parts of the tenth embodiment of the present invention.

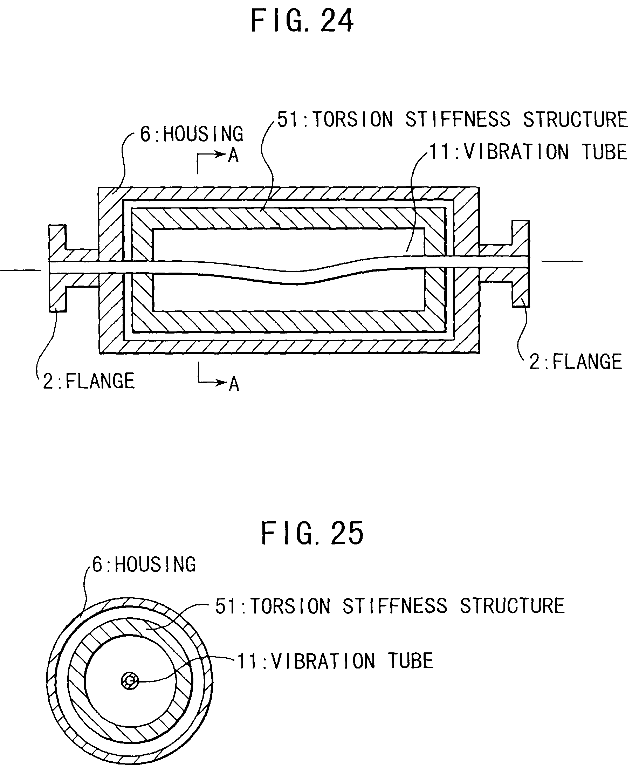

Figure 24 shows a drawing for explaining the configuration of the essential parts of the eleventh embodiment of the present invention.
Figure 25 is an A-A cross sectional view of the embodiment shown in Figure 24.

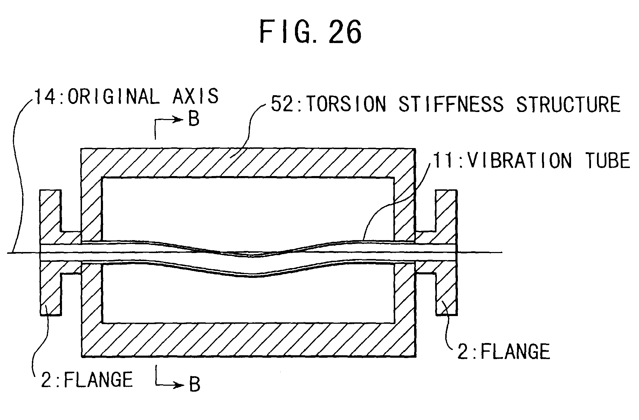

Figure 26 shows a drawing for explaining the configuration of the essential parts of the twelfth embodiment of the present invention.

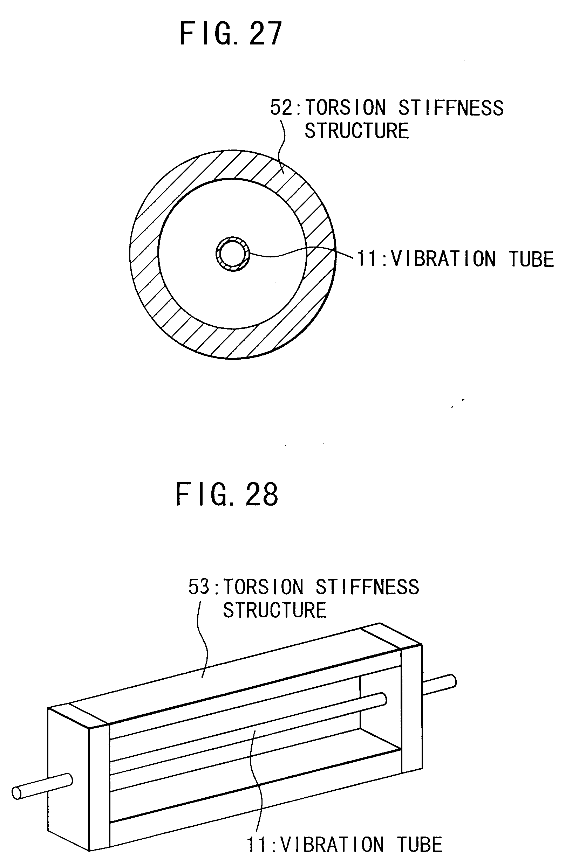

Figure 27 is a B-B cross sectional view of the embodiment shown in Figure 26.
Figure 28 shows a drawing for explaining the configuration of the essential parts of the thirteenth embodiment of the present invention.

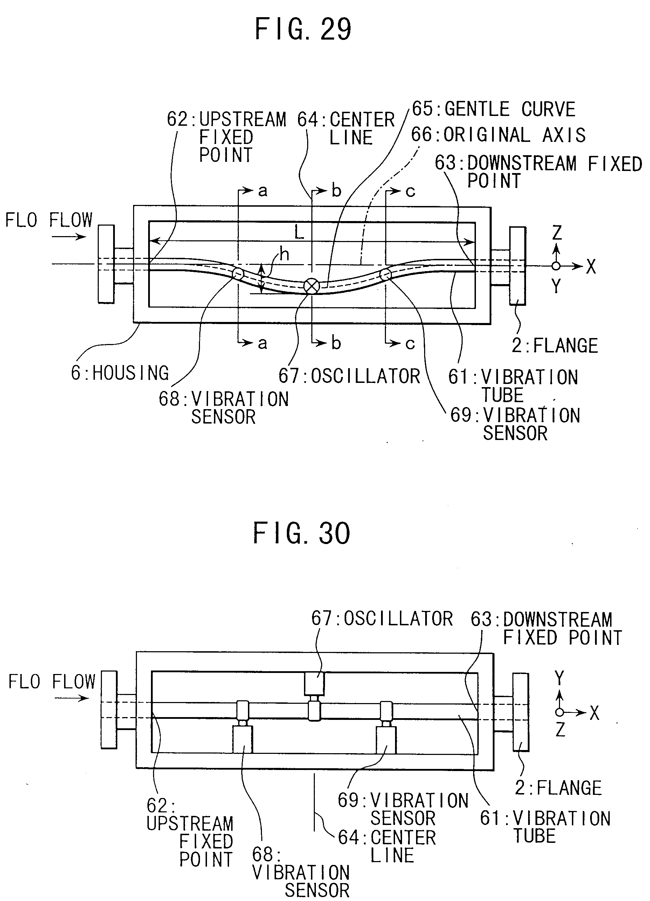

Figure 29 shows a drawing for explaining the configuration of the essential parts of the fourteenth embodiment of the present invention.

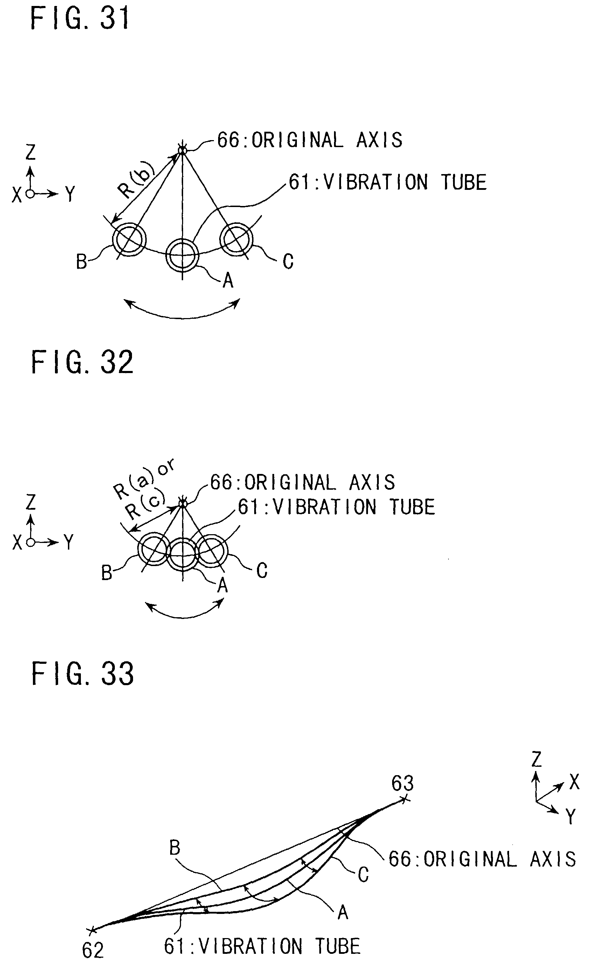

Figure 30 is a front view of the embodiment shown in Figure 29. Figure 31 is a drawing for explaining operations in the embodiment shown in Figure 29. Figures 32 and 33 are also drawings for explaining operations in the embodiments shown in Figure 29.

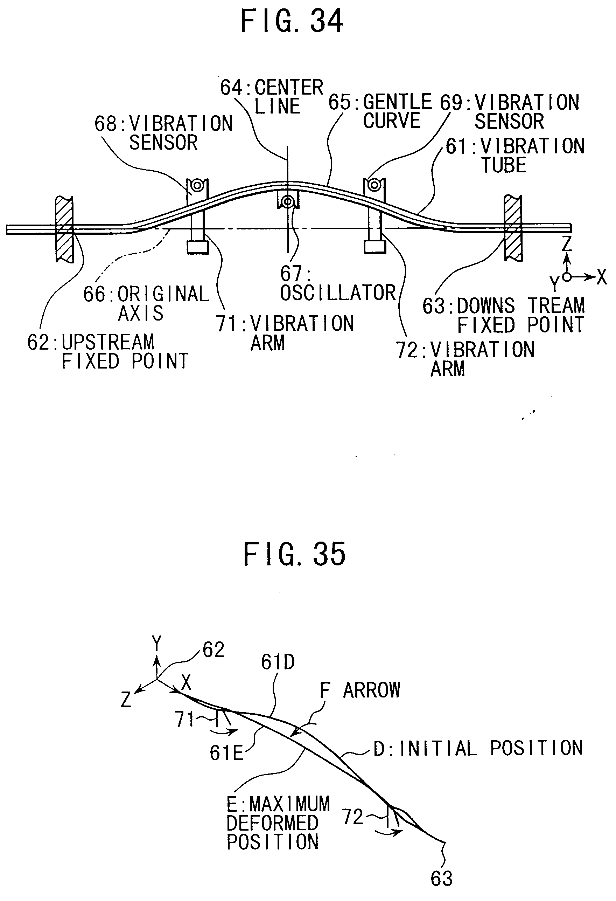

Figure 34 shows a drawing for explaining the configuration of the essential parts of the fifteenth embodiment of the present invention.

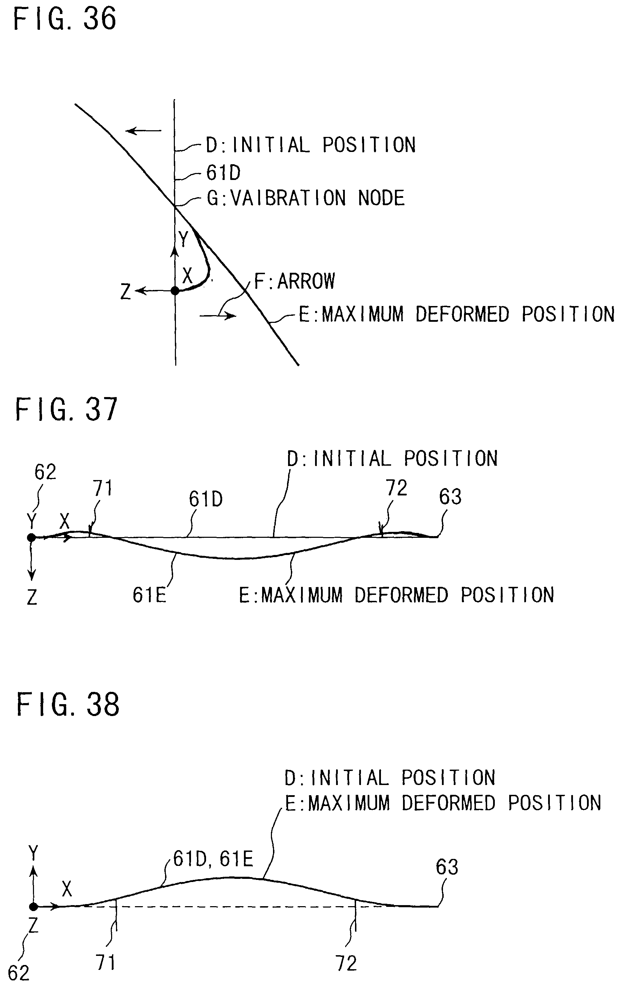

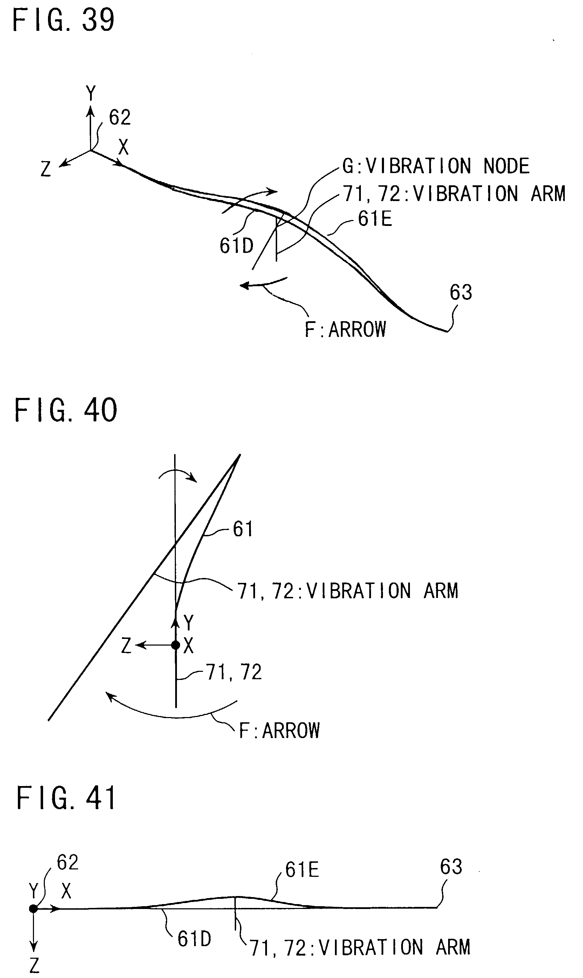

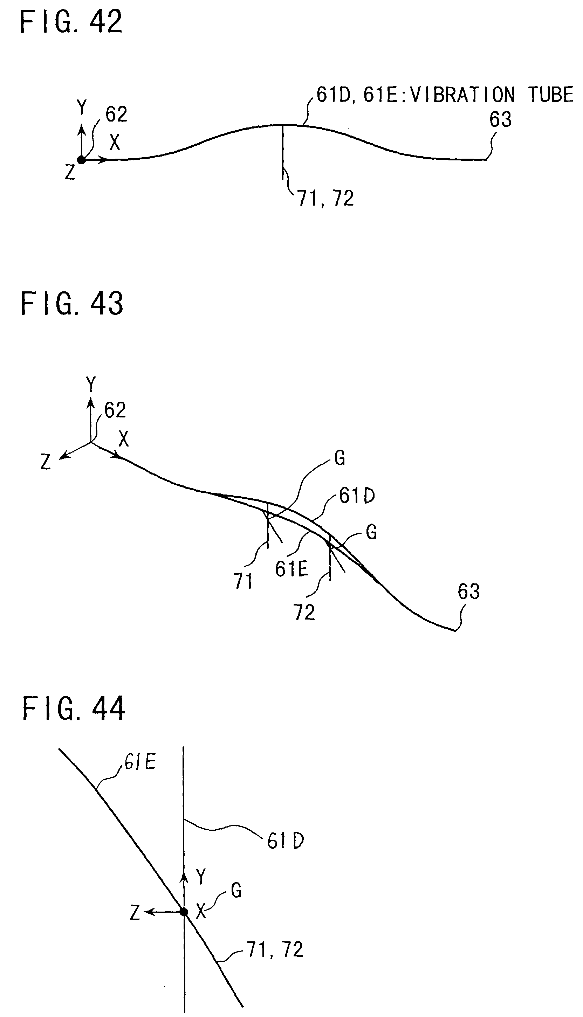

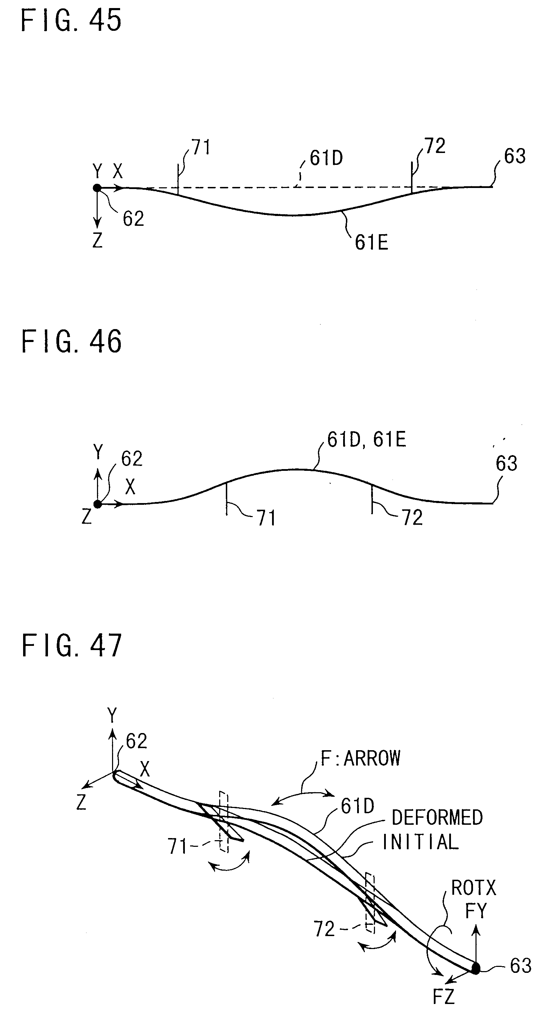

Figure 35 shows a perspective view for explaining the configuration of the essential parts of the sixteenth embodiment of the present invention. Figure 36 is a projection drawing in the X direction of the embodiment shown in Figure 35. Figure 37 is a projection drawing in the Y direction of the embodiment shown in Figure 35. Figure 38 is a projection drawing in the Z direction of the embodiment shown in Figure 35. Figure 39 is a perspective view for explaining operations in the embodiment shown in Figure 35. Figure 40 is a projection drawing in the X direction of the embodiment shown in Figure 39. Figure 41 is a projection drawing in the Y direction of the embodiment shown in Figure 39. Figure 42 is a projection drawing in the Z direction of the embodiment shown in Figure 39. Figure 43 is a perspective view for explaining operations in the embodiment shown in Figure 35. Figure 44 is a projection drawing in the X direction of the embodiment shown in Figure 43. Figure 45 is a projection drawing in the Y direction of the embodiment shown in Figure 43. Figure 46 is a projection drawing in the Z direction of the embodiment shown in Figure 43.

Figure 47 shows a perspective view for explaining operations in the essential parts of the seventeenth embodiment of the present invention.

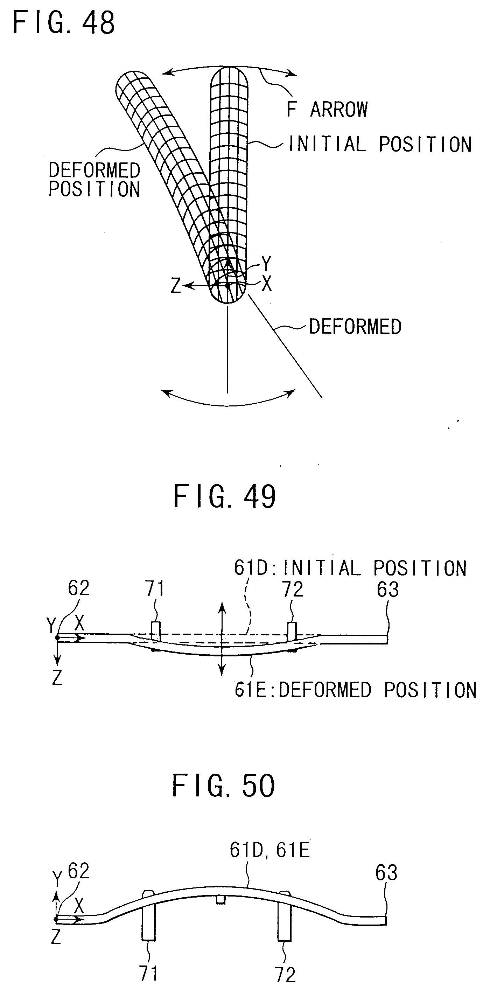

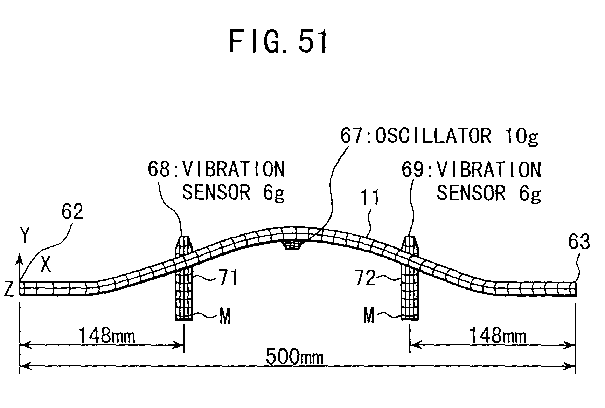

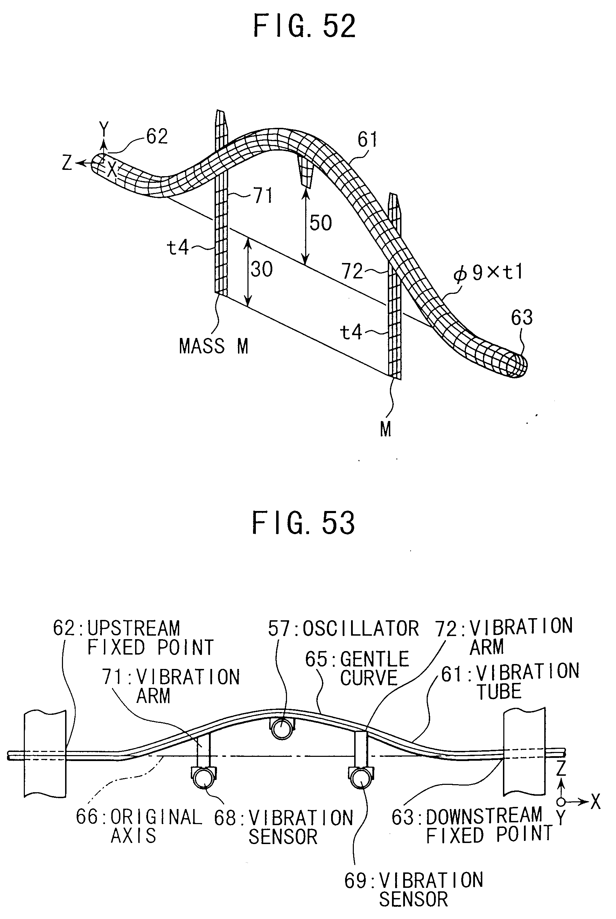

Figure 48 is a projection drawing in the X direction of the embodiment shown in Figure 47. Figure 49 is a projection drawing in the Y direction of the embodiment shown in Figure 47. Figure 50 is a projection drawing in the Z direction of the embodiment shown in Figure 47. Figure 51 is a drawing for explaining operations in the embodiment shown in Figure 47 and is a front view in the Z direction. Figure 52 is a perspective view for explaining operations in the embodiment shown in Figure 47.

Figure 53 shows a drawing for explaining the configuration of the essential parts of the eighteenth embodiment of the present invention.

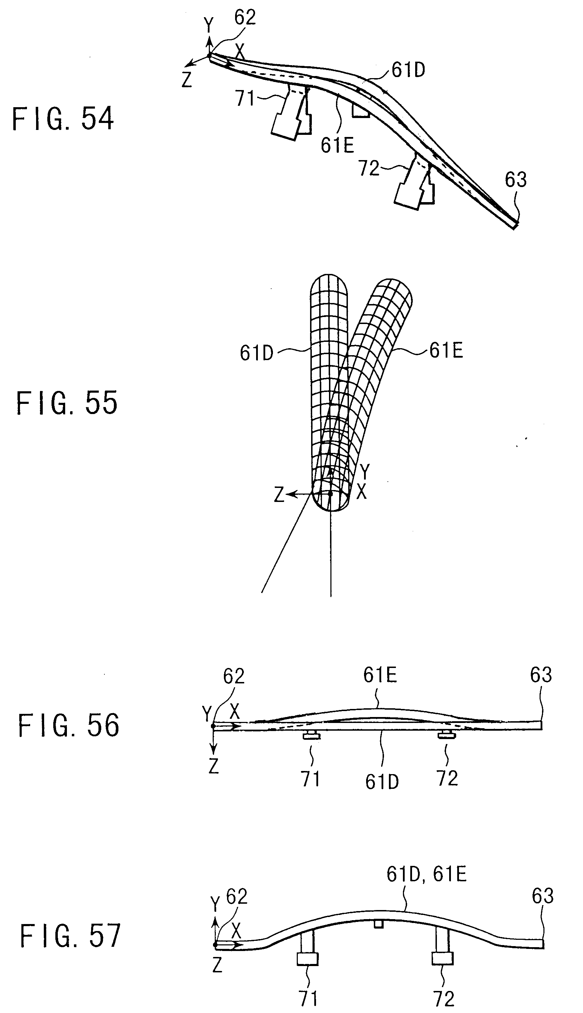

Figure 54 shows a perspective view for explaining operations in the essential parts of the nineteenth embodiment of the present invention.

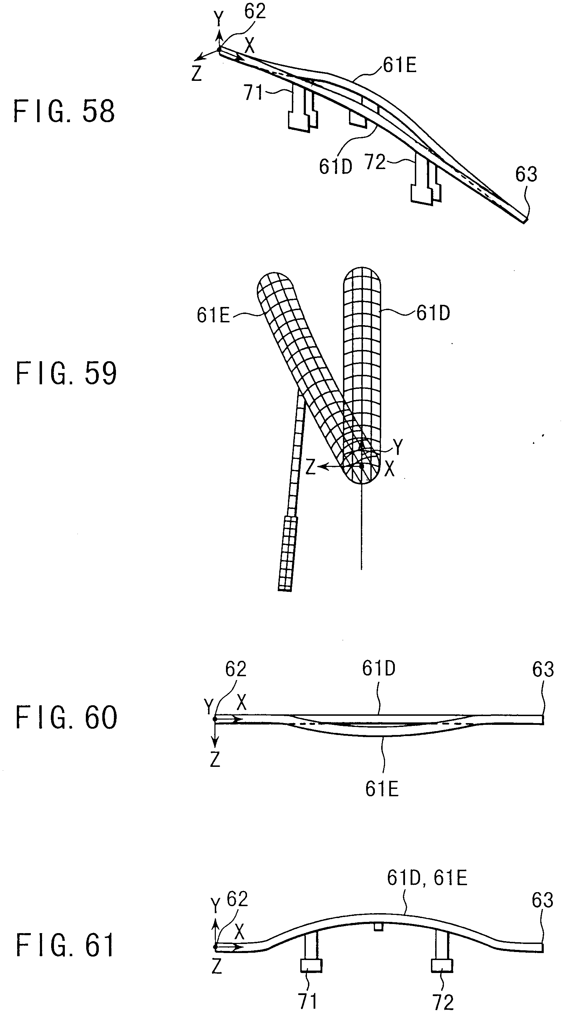

Figure 55 is a projection drawing in the X direction of the embodiment shown in Figure 54. Figure 56 is a projection drawing in the Y direction of the embodiment shown in Figure 54. Figure 57 is a projection drawing in the Z direction of the embodiment shown in Figure 54.

Figure 58 is a perspective view for explaining operations in the first-order mode in the embodiment shown in Figure 53. Figure 59 is a projection drawing in the X direction of the embodiment shown in Figure 58. Figure 60 is a projection drawing in the Y direction of the embodiment shown in Figure 58. Figure 61 is a projection drawing in the Z direction of the embodiment shown in Figure 58.

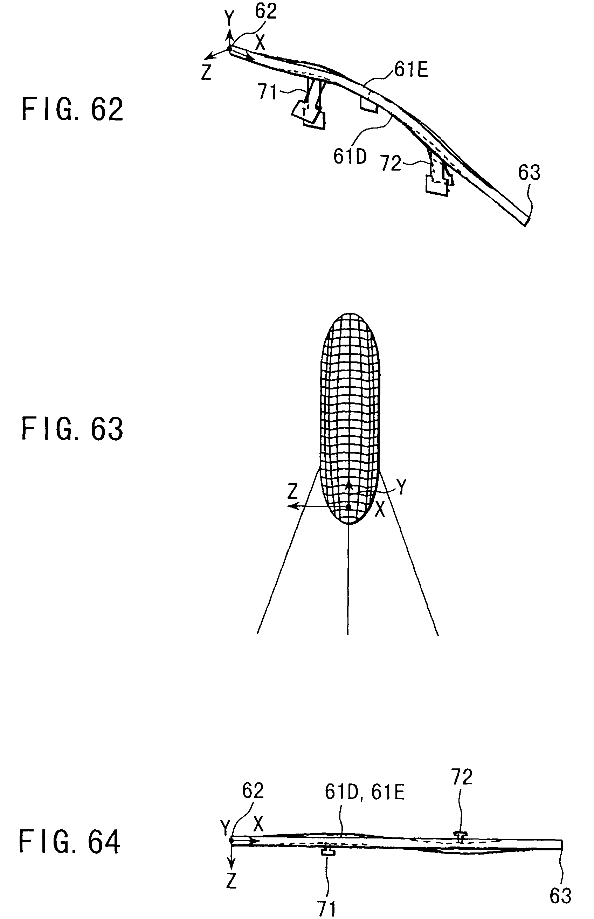

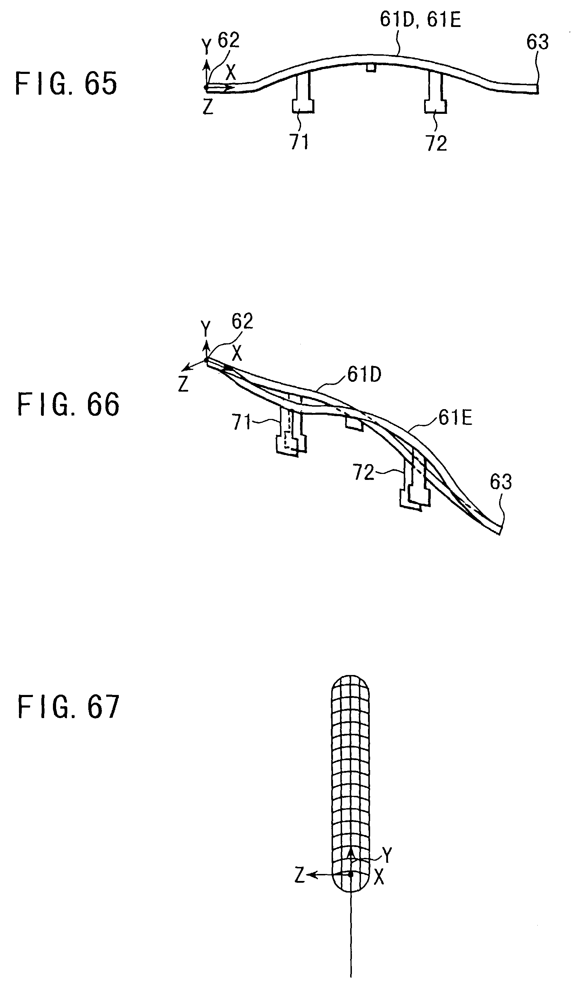

Figure 62 is a perspective view for explaining operations in the second-order mode in the embodiment shown in Figure 53. Figure 63 is a projection drawing in the X direction of the embodiment shown in Figure 62. Figure 64 is a projection drawing in the Y direction of the embodiment shown in Figure 62. Figure 65 is a projection drawing in the Z direction of the embodiment shown in Figure 62.

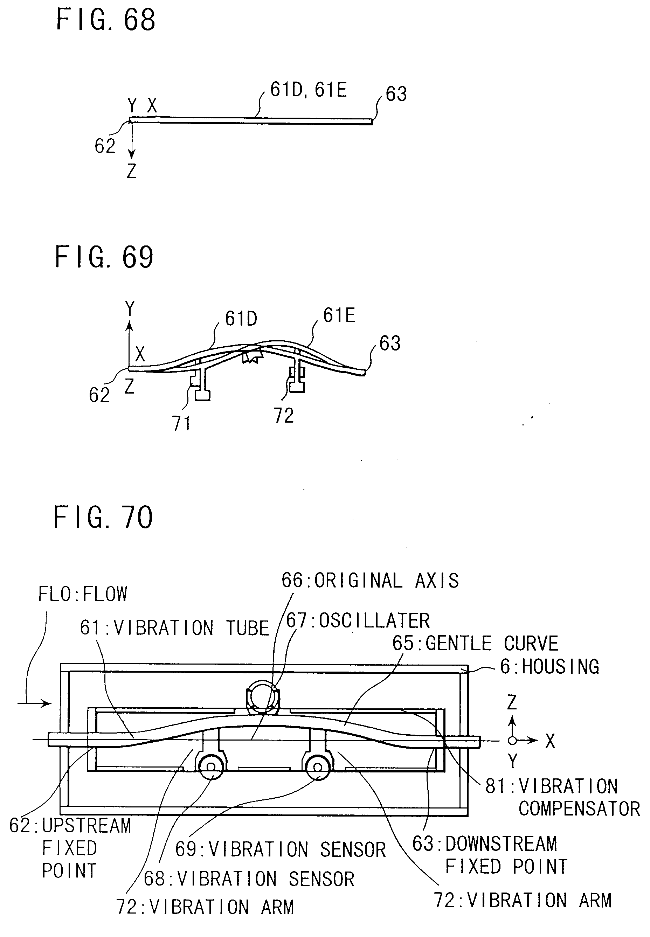

Figure 66 is a perspective view for explaining operations in the fourth-order mode in the embodiment shown in Figure 53. Figure 67 is a projection drawing in the X direction of the embodiment shown in Figure 66. Figure 68 is a projection drawing in the Y direction of the embodiment shown in Figure 66. Figure 69 is a projection drawing in the Z direction of the embodiment shown in Figure 66.

Figure 70 shows a drawing for explaining the configuration of the essential parts of the twentieth embodiment of the present invention.

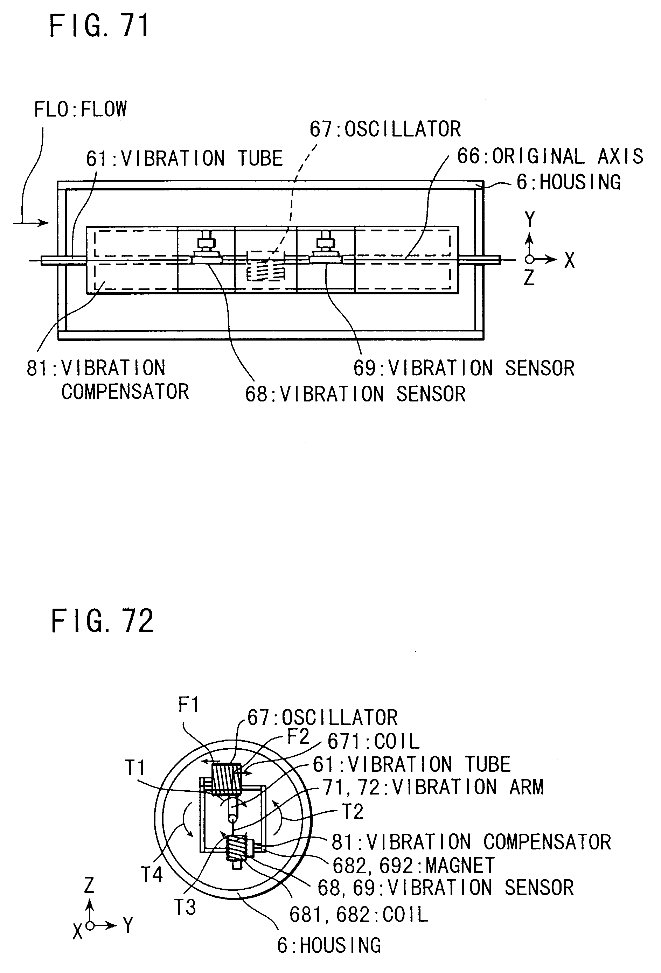

Figure 71 is a front view of the embodiment shown in Figure 70. Figure 72 is a side view of the embodiment shown in Figure 70.

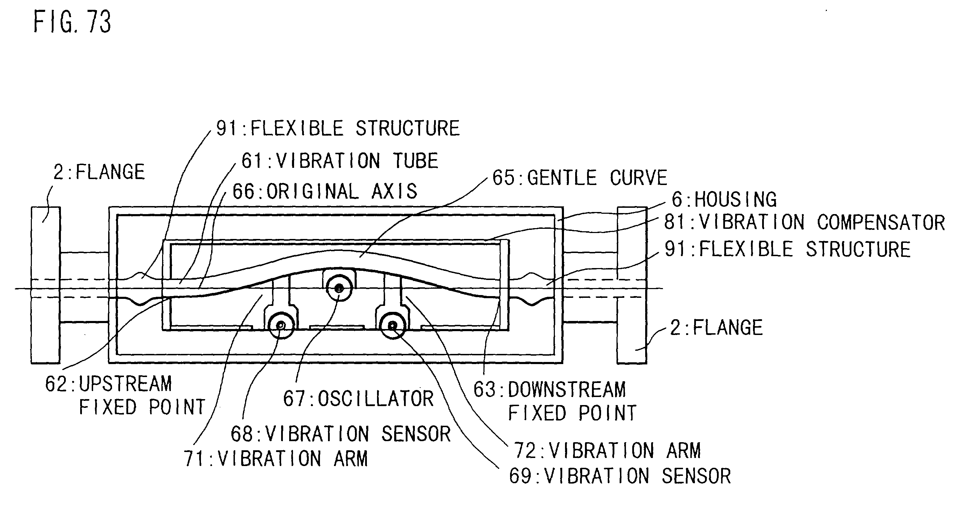

Figure 73 shows a drawing for explaining the configuration of the essential parts of the twenty-first embodiment of the present invention.

## DESCRIPTION OF THE PREFERRED EMBODIMENT

Figure 6 shows a drawing for explaining the configuration of the essential parts of the first embodiment of the present invention. In Figure 6, the same symbols as those in Figure 1 represent the same functions. In the following, only the portions different from those in Figure 1 will be described.

Numeral 11 is a vibration tube that performs simple harmonic oscillation or circular motion on the circumferences at predetermined distances from each point on original axis 14 that is a straight line connecting upstream fixed point 12 with downstream fixed point 13.

Numeral 15 shows an oscillator provided at the center of vibration tube 11. Numerals 16 and 17 are vibration sensors provided on both sides of the center of vibration tube 11.

In the above configuration, Figure 7 is a b-b cross sectional view of vibration tube 11 of Figure 6. Figure 8 is an a-a or c-c cross sectional view of vibration tube 11 of Figure 6. Figure 9 is a perspective view showing the state of vibration of vibration tube 11.

In Figures 7 and 8, vibration tube 11 is located in the vicinity of position A when the tube is in the non-excited state.

When vibration tube 11 is in an excited state, the axial line of the tube moves on the circumferences away from original axis 14 by radius $R(x)$. In the position of cross section b-b, vibration tube 11 repeatedly oscillates like $A \rightarrow B \rightarrow A \rightarrow C \rightarrow A \rightarrow B \rightarrow$ on a circumference away from original axis 14 by radius $R(b)$ and, in the position of cross section a-a or c-c, on a circumference away from original axis 14 by radius R(a) or R(c). In Figure 9, symbols A, B, and C correspond to each position of vibration tube 11 in Figures 7 and 8. Numerals 12 and 13 indicate the fixed points and numeral 14, the original axis.

Since vibration tube 11 oscillates only in the circumferential planes at equal distances away from original axis 14, the length of vibration tube 11 does not vary regardless of the position of vibration tube 11.

Accordingly, the tensile force in the axial direction is always constant. That is, the leakage of vibration due to the change in the axial force can be eliminated. Enhancing the isolation of vibration enables a highly accurate and stable Coriolis mass flowmeter to be achieved because vibration inside the flowmeter becomes stable.

Specifically, since the Q value of the internal vibration becomes high, the flowmeter is not easily affected by vibration noise, and thus a Coriolis mass flowmeter is achieved that consumes less power, and reduces zero and span changes due to changes in the amount of vibration leakage.

As a result,

(1) A Coriolis mass flowmeter immune to external vibration noise can be obtained because the Q value of the internal vibration system can be made high, and even if external noise is applied, the influence of the noise is relatively low and vibration is stable;
(2) Since stable excitation can be implemented with less energy, a Coriolis mass flowmeter of low current consumption can be obtained;
(3) If dissipation of vibration energy to the outside changes or the dissipation between the upstream and downstream sides becomes unbalanced, the internal vibration system is affected and the zero and span are changed by it.
Since vibration is always confined internally in the present invention, the above influence or change are not a concern, and thus a highly accurate Coriolis mass flowmeter can be obtained.
(4) If vibration tube 11 is bent to a predetermined shape in advance in a non-oscillated state, ambient temperature changes can be absorbed by this bent part and so a Coriolis mass flowmeter having good temperature characteristics can be obtained.

In addition, a slight change in the bent part does not affect the output characteristics.

Further,

(1) By simultaneously using two or more oscillators and changing their angles, a Coriolis mass flowmeter that vibrates within the circumferential planes can be obtained.
(2) By utilizing electromagnetic forces, a Coriolis mass flowmeter that can generate sufficient force even though it is a non-contact method, can be obtained.

Figure 10 shows a perspective view for explaining the essential parts of the second embodiment of the present invention. Symbol "A" indicates the shape of the vibration tube 11 in the vicinity of its fundamental position in the non-excited state and symbols "B" and "C" indicate the shape of the vibration tube in the maximum deformed state.

In Figure 10, vibration tube 11 oscillates in the second-order mode (or in the third-order or a higher-order mode), its vibration node is located on original axis 14, and vibration tube 11 oscillates on circumferences away from original axis 14 by R(x).

For vibration detection and signal processing, the same processing as that for ordinary Coriolis mass flowmeters may be used. For example, there is a technique to determine mass flow passing through a vibration tube by detecting the Y component of vibration with vibration sensors 16 and 17, determining the phase difference between the outputs of the two sensors, and applying frequency and temperature corrections.

Figure 11 shows a drawing for explaining the configuration of the essential parts of the third embodiment of the present invention and indicates a cross section of vibration tube 11 and oscillator 15 and corresponds to Figure 7.

In this embodiment, oscillator 15 is composed of three coils 151 and magnetic components 152 attached to vibration tube 11. Permanent magnets can be used together to improve efficiency.

Oscillator 15 generates forces in the direction of arrow D shown in coils 151. In the case of Figure 11, three excitation coils 151 are arranged to generate forces in directions that are mutually 120 degrees different.

In order to perform vibration of vibration tube 11 along circumferences, the following forces are generated between excitation coils 151-1, 151-2, and 151-3 and magnetic components 152 (in the case where amplitude angle $\theta$ for vibration along circumferences is small ($\theta < \pi$)):

$$\text{Coil 151-1: } F1 = A\sin(\omega t + 0)$$

$$\text{Coil 151-2: } F2 = B\sin(2\omega t + \pi/2) + C = B\cos(2\omega t) + C$$

$$\text{Coil 151-3: } F3 = A\sin(\omega t + \pi) = -A\sin(\omega t)$$

where

A, B, C are constants,
$\omega$: Angular velocity, and
t: Time.

Forces are controlled in such a manner as above and vibration tube 11 moves on the circumference away from original axis 14 by radius R.

As a result,

(1) A Coriolis mass flowmeter that can implement vibration within circumferences by simultaneously using two or more excitation coils 151 and changing their angles can be obtained.

(2) A Coriolis mass flowmeter that can generate sufficient forces using a non-contact method by employing electromagnetic forces can be obtained.

Figure 12 shows a drawing for explaining the configuration of the essential parts of the fourth embodiment of the present invention. This is an example in which two excitation coils 151-4 and 151-5 are mounted at an angle of 90 degrees to each other. Oscillator 15 generates forces in the direction of arrow D shown in excitation coils 151-4 and 151-5.

In the case of small amplitude angle $\theta$, the above forces are expressed as shown below:

$$\text{Coil 151-4: } F4 = A\sin(\omega t + 0)$$

$$\text{Coil 151-5: } F5 = B\sin(2\omega t + \pi/2) = B\cos(2\omega t)$$

Figure 13 shows a perspective view for explaining the essential parts of the fifth embodiment of the present invention. Numeral 21 is an oscillator composed of rotating body 211 and driving object 212 to drive rotating body 211. Rotating body 211 moves along a part of a circumference or rotates around the center axis taken as original axis 14 with approximately the middle point of vibration tube 11 fixed to a position on rotating body 211 at the predetermined radius R distant from the center axis. The above motion of rotating body 211 is carried out so that vibration tube 11 performs simple harmonic oscillation or circular motion.

In this case, motor 212 that rotates around the same axis as original axis 14 is provided on original axis 14 and disk 211 as rotating body is attached to the shaft of motor 212. Disk 211 is connected to vibration tube 11, through which a measuring fluid passes, at a position away from original axis 14 by radius R.

By rotating motor 212, vibration tube 11 also moves on the circumference away from the rotation axis by radius R. If motor rotation is controlled to move along a part of a circumference, vibration tube 11 performs simple harmonic oscillation on a circumference as shown in Figure 6 to Figure 8.

Since an oscillator composed of rotating body 211 that rotates or moves along a circumference and driving object 212 to drive this rotating body 211 are provided, a Coriolis mass flowmeter that can achieve vibration within circumferential planes with a simple mechanism and without a complex control circuit is obtained.

If a stepping motor is used, vibration can also be finely controlled. A very strong force can be generated depending on the system and oscillation in non-resonance states is also possible.

Figure 14 shows a drawing for explaining the configuration of the essential parts of the sixth embodiment of the present invention. Figure 15 is a drawing for explaining operations in the embodiment shown in Figure 14. Figure 16 is a perspective view that indicates the conditions of vibration of vibration tube 11.

Numeral 22 is an oscillator to apply an oscillation component and a predetermined bias component to vibration tube 11 in an excited state so that vibration tube 11 is located on circumferences away from each point of original axis 14 by predetermined distances in an excited state. Vibration tube 11 is a straight tube in a non-excited state.

In the above configuration, in the initial state of non-excitation, vibration tube 11 exists on original axis 14 as a complete straight tube. In the initial state, vibration tube 11 is located in position A shown in Figure 15.

Since a tensile bias component is added by the operation of oscillator 22, vibration tube 11 moves to a position of radius R away from original axis 14. Vibration tube 11 during excitation changes its position like B→C→D→C→B→C→.

As a result, vibration tube 11 can be in a completely symmetrical form in the Y and Z directions around original axis 14.

If the initial shape of vibration tube 11 in a non-excited state is non-symmetrical, it is difficult to achieve stable vibration within circumferential planes with a high Q value because the resonance frequencies of vibrations in the Y and Z directions are slightly different.

In this embodiment, since complete symmetry is obtained even considering vibration by dividing it into the components in each direction, a Coriolis mass flowmeter that achieves ideal vibration within circumferential planes at a high Q value is obtained. In addition, if vibrations in the Y and Z directions are generated completely independently, a torsional component in the axial direction of vibration tube 11 can be eliminated even if vibration within a circumferential plane occurs steadily.

If a torsional component is eliminated, it is no longer necessary to take measures to isolate vibration for that component. Since the vibration tube oscillation is symmetrical about the original axis, if the amount of oscillation is made large, a Coriolis mass flowmeter that can easily achieve rotational motion around the original axis, not a simple harmonic oscillation, can be obtained.

Figure 17 shows a perspective view for explaining the essential parts of the seventh embodiment of the present invention. Figure 18 is the Y-Z cross sectional view of the embodiment shown in Figure 17.

Numeral 31 is a counter weight joined with vibration tube 11 in the opposite position of vibration tube 11 to original axis 14 so that the center of gravity of the entire vibration system composed of vibration tube 11 and oscillator 15 does not move when excited.

In this case, counter weight 31 is installed near the center portion of vibration tube 11 via joint arm 32.

In the above configuration, when vibration tube 11 moves on a circumference as B→A→C, joint arm 32 and counter weight 31 move as B'→A'→C' like a pendulum around original axis 14. The position and mass of counter weight 31 are determined so that the center of gravity of the entire vibration system (11, 32 and 31) does not cause positional changes on original axis 14.

As a result, since the center of gravity of the entire vibration system does not move, the entire flowmeter does not cause unwanted vibration and thus enhances isolation of vibration. By improving isolation of vibration, the vibration inside the flowmeter becomes more stable, and thus a highly accurate and stable Coriolis mass flowmeter can be obtained.

Figure 19 shows a drawing for explaining the configuration of the essential parts of the eighth embodiment of the present invention. Figure 20 is the Y-Z cross sectional drawing of the embodiment shown in Figure 19.

In this embodiment, counter weights 31 and joint arms 32 are provided in two places, on the upstream and downstream sides, of vibration tube 11 through which a measuring fluid passes.

In the above configuration, as shown in Figure 20, when vibration tube 11 moves as B→A→C, counter weights 31 and joint arms 32 move as B'→A'→C'.

As a result, counter weights 31 and joint arms 32 are installed in places where vibration tube 11 is not so distant from original axis 14 and where torsional vibration is dominant over transverse vibration. Accordingly, a Coriolis mass flowmeter in which a construction without movement of the center of gravity can easily be obtained.

Figure 21 shows a perspective view for explaining the essential parts of the ninth embodiment of the present invention. Figure 22 is a drawing for explaining operations in the embodiment shown in Figure 21.

Numeral 41 shows vibration compensators that cancel the rotational components generated around the original axis accompanied by vibration of vibration tube 11 and construct vibration nodes in the vicinity of both fixed points of vibration tube 11.

In this case, vibration compensators 41 are of disk type and are joined to vibration tube 11 in the vicinity of both its ends. For vibration of vibration tube 11, torsional vibration around original axis 14 is dominant near fixed points 12 and 13.

In the above configuration, attaching vibration compensators 41 that rotate in the opposite direction to this torsional rotation cancels out the vibration of each other, eliminates the vibration of vibration tube 11 in the vicinity of fixed points 12 and 13, and eliminates the leakage of vibration to the outside. Isolation of the vibration system from outside is intended by the above configuration.

Since vibration compensators 41 are provided, the torsional component around original axis 14 can be canceled and isolation of vibration is enhanced by eliminating unwanted vibration leakage to the outside of a Coriolis mass flowmeter.

By improving isolation of vibration, vibration inside a Coriolis mass flowmeter becomes more stable and a highly accurate and stable Coriolis mass flowmeter can be obtained.

Figure 23 shows a drawing for explaining the configuration of the essential parts of the tenth embodiment of the present invention and is a magnified drawing of the vicinity of upstream fixed point 12. In this embodiment, arm form vibration compensators 42 are used.

As shown in Figure 23, oscillators 43 that forcibly generate vibration in the opposite direction of torsion of vibration tube 11 may be provided for vibration compensators 42 if necessary.

In the above configuration, the lengths of arrow E indicate the sizes of amplitude. If vibration compensators 42 are designed so that the joint of vibration compensators 42 and vibration tube 11 becomes the node of vibration, a Coriolis mass flowmeter, in which vibration does not propagate to part of vibration tube 11 from vibration compensators 42 to fixed point 12, can be obtained.

Figure 24 shows a drawing for explaining the configuration of the essential parts of the eleventh embodiment of the present invention. Figure 25 is the A-A cross sectional view of the embodiment shown in Figure 24.

Numeral 51 is a torsion stiffness structure connected to both fixed points of vibration tube 11 so that torsional vibration does not leak to the outside. In this case, torsion stiffness structure 51 whose torsion stiffness around original axis 14 is sufficiently large compared with that of vibration tube 11 is mounted on vibration tube 11.

Sufficiently large torsion stiffness means that the stiffness is larger by one order of magnitude or more as a standard.

$$\text{Torsion stiffness of hollow circular shaft} = G \times \pi/32 \times (d_2{}^4 - d_1{}^4)$$

where

G: Modulus of transverse elasticity,
$d_2$: Outer diameter, and
$d_1$: Inner diameter.

As seen above, the torsion stiffness is affected by the fourth power of diameter. Therefore, a vibration system whose stiffness is larger by one order of magnitude or more than the existing system can be fabricated relatively easily by changing the diameters of vibration tube 11 and torsion stiffness structure 51 as shown in Figure 25.

As a result, provision of a structure of sufficiently high torsion stiffness 51 enables the torsional component of the internal vibration system around original axis 14 to be fixed rigidly and allows the Coriolis mass flowmeter to prevent torsional vibration from leaking outside.

That is, the vibration inside the flowmeter becomes more stable by improving isolation of vibration, and thus, a highly accurate and stable Coriolis mass flowmeter can be obtained.

Figure 26 shows a drawing for explaining the configuration of the essential parts of the twelfth embodiment of the present invention. Figure 27 is the B-B cross sectional view of the embodiment shown in Figure 26.

In Figure 26, numeral 52 shows a structure that is fabricated by integrating large torsion stiffness structure 52 with housing constructing a detector. This structure reduces the number of parts and so a low-cost Coriolis mass flowmeter can be obtained.

Figure 28 shows a drawing for explaining the configuration of the essential parts of the thirteenth embodiment of the present invention.

In Figure 28, numeral 53 shows a structure having large torsion stiffness composed of two rectangular solids. Since this configuration is not a double tube construction, a low-cost Coriolis mass flowmeter that is easy to manufacture can be obtained.

In addition, although structure 51 is described as a circular cylindrical tube in previous embodiments, it is not limited to a circular cylindrical tube; a rectangular cylindrical tube may be used. In short, it is sufficient to be a structure having a large torsion stiffness connected to both fixed points of vibration tube 11 so that torsional vibration does not leak to the outside.

Figure 29 shows a drawing for explaining the configuration of the essential parts of the fourteenth embodiment of the present invention. Figure 30 is a front view of the embodiment shown in Figure 29.

In Figures 29 and 30, the same symbols as those in Figure 1 represent the same functions. In the following, only the portions different from those in Figure 1 will be described.

Vibration tube 61 is line-symmetrical about center line 64 that is equally distant from upstream fixed point 62 and downstream fixed point 63. Original axis 66 is taken as a straight line connecting upstream fixed point 62 and downstream fixed point 63. Vibration tube 61 consists of a single tube that has at least one gentle curve 65 and performs simple harmonic oscillation on circumferences each being at predetermined distances from each point of original axis 66.

In this case, let the distance between upstream fixed point 62 and downstream fixed point 63 be L and the distance between original axis 66 and vibration tube 61 be h, then the shape of vibration tube 61 should be that which satisfies the relation of approximately $h \leq 0.2L$.

Oscillator 67 is provided at the center of vibration tube 61. Vibration sensors 68 and 69 are provided on the upstream and downstream sides of vibration tube 61, respectively.

In the above configuration, Figure 31 is the b-b cross sectional view of vibration tube 61 shown in Figure 29 and Figure 32 is the a-a or c-c cross sectional view of vibration tube 61 shown in Figure 29. Figure 33 is a perspective view indicating the state of vibration of vibration tube 61.

In Figures 31 and 32, vibration tube 61 is located in the vicinity of position A when the tube is in the non-excited state. When vibration tube 61 is put in the excited state, the center of the tube moves on the circumference away from original axis 66 by radius R(x).

In the position of cross section b-b, the center part of vibration tube 61 oscillates repeatedly like A→B→A→C→A→B→ on the circumference away from original axis 66 by radius R(b), and in the position of cross section a-a or c-c, the tube oscillates in the same manner as above on the circumference away from original axis 66 by radius R(a) or R(c).

In Figure 33, lines A, B, and C correspond to each position of vibration tube 61 shown in Figures 31 and 32. While, numerals 62 and 63 show the fixed points and numeral 66 shows the original axis.

In addition, for vibration detection and signal processing, processing similar to that of ordinary Coriolis mass flowmeters may apply. For example, mass flow passing through the tube can be determined by detecting the Y component of vibration using vibration sensors 68 and 69, determining the phase difference between outputs of two sensors, and applying frequency and temperature corrections and so forth.

Since vibration tube 61 oscillates only within circumferential planes that are equidistant from original axis 66, the length of vibration tube 61 does not vary regardless of the position of vibration tube 61.

Accordingly, the tensile force in the axial direction is always constant. That is, the leakage of vibration due to variation in the force in the axial direction can be eliminated.

Enhancement of isolation of vibration makes vibration inside the flowmeter stable and thus a highly accurate and stable Coriolis mass flowmeter can be achieved.

Specifically, since the Q value of the internal vibration becomes high, the flowmeter is not easily affected by vibration noise, and thus a Coriolis mass flowmeter is achieved that consumes less power, and reduces zero and span changes due to changes in the amount of vibration leakage.

As described above, enhanced isolation of vibration provides the following merits:

(1) A Coriolis mass flowmeter immune to external vibration noise can be obtained because the Q value of the internal vibration system can be made high, and even if external noise is applied, the influence of the noise is relatively low and vibration is stable;

(2) Since stable excitation can be implemented with less energy, a Coriolis mass flowmeter of low current consumption can be obtained;

(3) If dissipation of vibration energy to the outside changes or the dissipation between the upstream and downstream sides becomes unbalanced, the internal vibration system is affected and the zero and span are changed by it.

Since vibration is always confined internally in the present invention, the above influence or change are not a concern, and thus a highly accurate Coriolis mass flowmeter can be obtained.

(4) Since the tube through which a measuring fluid passes is of one-through-tube construction without branches or gaps from the inlet to the outlet of a flowmeter, a Coriolis mass flowmeter, that has a low pressure loss, is hard to clog and is easy to clean, can be obtained.

(5) Since vibration tube 61 has gentle curve 65 bent to a predetermined shape in a non-oscillated state, rather than a completely straight tube, and since ambient temperature changes are easily absorbed by curved part 65, a Coriolis mass flowmeter having good temperature characteristics can be obtained.

That is, a Coriolis mass flowmeter that simultaneously offers the merits of both a bent tube and a straight tube is obtained by using a suitable curve for the vibration tube that is not a general-purpose bent tube nor a completely straight tube.

Figure 34 shows a drawing for explaining the configuration of the essential parts of the fifteenth embodiment of the present invention. This is an embodiment corresponding to claim 10.

Vibration arms 71 and 72 cross at right angles to original axis 66 or vibration tube 61 respectively, in this case orthogonal to original axis 66. Each end of them is fixed to vibration tube 61 and each other end of them is located on the opposite side of vibration tube 61 to original axis 66. However, in this case, two arms are arranged in positions symmetrical to center line 64.

As shown in Figure 34, the vibration system has a shape that is line-symmetrical in the X-axis direction. That is, to center line 64 (reference line for line symmetry) for upstream fixed point 62 and downstream fixed point 63, vibration tube 61, vibration sensors 68 and 69, and vibration arms 71 and 72 are located in symmetrical positions.

In this case, the center of gravity of the entire vibration system (vibration tube 61, vibration sensors 68 and 69, oscillator 67, and vibration arms 71 and 72) is arranged on original axis 66 by adjusting the mass distributions and shapes of vibration arms 71 and 72.

That is, if the shapes and weights of vibration tube 61, vibration sensors 68 and 69, and oscillator 67 are determined, their total mass M and the position of center of gravity (Z: Z coordinate of position of center of gravity) are determined.

If masses and shapes of vibration arms 71 and 72 are adjusted to obtain their total mass m and the position of center of gravity z, the center of gravity of the entire vibration system is located on original axis 66 when relationship $M \times Z = m \times z$ holds.

As a result, since the center of gravity of the entire vibration system is located on original axis 66, abnormal action, such as if a part far away from the center of gravity vibrates abnormally, cannot easily occur even if external vibration noise or shock is applied to the system.

In addition, even if the vibration system is influenced, the influence is symmetrical over the vibration system and the system is thus likely to be affected relatively uniformly. Thus, even if it is not normal vibration, noise can be canceled by detecting vibration at two points on the upstream and downstream sides of vibration tube 61.

From the above description, it is shown that a stable and highly accurate Coriolis mass flowmeter, not easily affected by external vibration and shock, can be obtained.

Figures 35, 36, 37, and 38 show drawings explaining the configuration of the essential parts of the sixteenth embodiment of the present invention. They are drawings for explaining vibrating operation for claim 11 and show the results of modal analysis using the finite element method with beam elements.

Figure 35 is a perspective view of vibration tube 61. Figure 36 is a projection drawing in the X direction of the embodiment shown in Figure 35. Figure 37 is a projection drawing in the Y direction of the embodiment shown in Figure 35. Figure 38 is a projection drawing in the Z direction of the embodiment shown in Figure 35. In these figures, both the shapes of vibration tube 61D in initial position D and vibration tube 61E in maximum deformed position E are indicated.

Vibration tube 61 and vibration arms 71 and 72 deform from initial position D to maximum positive deformed position E, as shown with arrow F in Figures 35, 36, 37 and 38, and return to initial position D again. Then they deform to maximum negative deformed position E that is symmetrical to maximum positive deformed position E about the XY plane, and then return to initial position D.

The vibration system repeats such simple harmonic oscillation. In addition, this analysis is a linear analysis when the amount of deformation is small and, in Figures 35, 36, 37, and 38, the actual deformation is shown magnified for clarity.

Further, claim 11 is characterized by placing the position of the center of gravity of the entire vibration system (vibration tube 61, vibration sensors 68 and 69, oscillator 67, and vibration arms 71 and 72) on vibration node G (see Figure 36). This is done by adjusting the mass distributions, shapes and stiffness of vibration tube 61 and vibration arms 71 and 72 and distance between these vibration arms. The drawing for explaining the fundamental configuration is similar to that of Figure 34.

In the position of vibration node G, the vibration system generates a rotational component around the X-axis but the position does not move (coordinates X, Y, and Z do not change).

If the shape of vibration tube 61 is determined in advance, the center of gravity of the entire vibration system can be located on vibration node G by adjusting the weights of vibration arms 71 and 72. The position of vibration node G greatly depends on the mounting positions of vibration arms 71 and 72.

In general, if vibration arms 71 and 72 gather toward the center (or if they are integrated to one center arm), vibration node G is located toward the positive side of the Y-axis as shown in Figures 39, 40, 41, and 42.

Figures 39, 40, 41, and 42 indicate the results of modal analysis using the finite element method with beam elements. Figure 39 is a perspective view of the embodiment shown in Figure 35. Figure 40 is a projection drawing in the X direction of the embodiment shown in Figure 39. Figure 41 is a projection drawing in the Y direction of the embodiment shown in Figure 39. Figure 42 is a projection drawing in the Z direction of the embodiment shown in Figure 39. In these drawings, both of vibration-tube shapes, 61D in initial position D and 61E in maximum deformed position E, are indicated.

If vibration arms 71 and 72 are adjusted to appropriate values as shown in Figures 43, 44, 45, and 46, vibration node G can be placed on original axis 66. Figures 43, 44, 45, and 46 indicate the results of modal analysis using the finite element method with beam elements.

Figure 43 is a perspective view of the embodiment shown in Figure 35. Figure 44 is a projection drawing in the X direction of the embodiment shown in Figure 43. Figure 45 is a projection drawing in the Y direction of the embodiment shown in Figure 43. Figure 46 is a projection drawing in the Z direction of the embodiment shown in Figure 43. In these drawings, both of vibration-tube shapes, 61D in initial position D and 61E in maximum deformed position E, are indicated.

It is considered that the reason for the above results, is that the intersections of vibration arms 71 and 72 with the Y-axis are positioned on the positive side of the Y-axis. This is because vibration tube 61 has a large deformation angle around original axis 66 in the vicinity of its center, in addition, because the Y-coordinate values of the points where vibration arms 71 and 72 are connected with vibration tube 61 are large. And thus, it is also because the deformation angles of arms 71 and 72 connected to vibration tube 61 become large.

For the above reason, in order to provide the center of gravity on original axis 66 and also on vibration node G, the provision of one vibration arm at the center is not sufficient. It becomes necessary to provide two symmetrical upstream and downstream vibration arms 71 and 72.

This eliminates useless vibration and enhances isolation of vibration because the center of gravity of the entire vibration system does not move.

As described above, enhanced isolation of vibration provides the following merits:

(1) A Coriolis mass flowmeter immune to external vibration noise can be obtained because the Q value of the internal vibration system can be made high, and even if external noise is applied, the influence of the noise is relatively low and vibration is stable;

(2) Since stable excitation can be implemented with less energy, a Coriolis mass flowmeter of low current consumption can be obtained;

(3) If dissipation of vibration energy to the outside changes or the dissipation between the upstream and downstream sides of vibration tube 61 becomes unbalanced, the internal vibration system is affected and the zero-point and span are changed by it.

Since vibration is always confined internally in the present invention, the above influence or change are not a concern, and thus a highly accurate Coriolis mass flowmeter can be obtained.

(4) Even if normally received noise and shock in the transverse direction are applied and so the center of gravity undergoes transverse motion, vibration caused by such noise can be easily identified from its mode form and frequency because they are motions different from ordinary oscillating vibration.

Accordingly, a stable and highly accurate Coriolis mass flowmeter, not easily affected by external vibration and shock, can be obtained.

Figures 47, 48, 49, and 50 show drawings for explaining operations in the essential parts in the seventeenth embodiment of the present invention. They are also drawings for explaining vibrating operation for claim 12.

In these drawings the results of modal analysis using the finite element method with shell elements are indicated. In addition, the drawing for explaining the fundamental configuration is similar to that of Figure 34.

Figure 47 shows a perspective view of the embodiment. Figure 48 is a projection drawing in the X direction of the embodiment shown in Figure 47. Figure 49 is a projection drawing in the Y direction of the embodiment shown in Figure 47. Figure 50 is a projection drawing in the Z direction of the embodiment shown in Figure 47. In these drawings, both of vibration-tube shapes, 61D in initial position D and 61E in maximum deformed position E, are indicated.

As shown with arrow F, vibration tube 61 and vibration arms 71 and 72 repeat simple harmonic oscillation to positive and negative maximum deformed positions on both sides of initial center position D. In addition, in Figures 47, 48, 49, and 50, the actual deformation is shown magnified for clarity.

This vibration system prevents force components FY and FZ orthogonal to original axis 66 caused by an oscillating force from oscillator 67, from being generated. This is done by limiting forces at fixed points 62 and 63 at both ends of vibration tube 61 in a steady oscillated state to only torsional component ROTX around original axis 66. The limitation is carried out by adjusting the mass distributions, shapes and stiffness of vibration tube 61 and vibration arms 71 and 72 and the distance between the vibration arms.

Figures 51 and 52 show a calculated model that realizes claim 12. Figure 51 is a front view of the model in the Z direction. Figure 52 is a perspective view of the model.

If this model is made with stainless steel and has the dimensions shown in Figures 51 and 52, the total sum of forces in the Z direction applied to fixed points 62 and 63 at both ends is:

$$\Sigma FZ \cong 0.4 \text{ kgf} \qquad \text{for M = 32 g}$$

$$\Sigma FZ \cong 0.13 \text{ kgf} \qquad \text{for M = 33 g}$$

$$\Sigma FZ \cong 0 \text{ kgf} \qquad \text{for M = 33.5 g.}$$

That is, when masses of 33.5 g are provided at the tips of vibration arms 71 and 72 respectively, forces applied to fixed points 62 and 63 at both ends become almost zero.

As a result, vibration cannot easily leak to outside because transverse force components FY and FZ do not occur except for torsional component ROTX around original axis 66 at fixed points 62 and 63 at both ends of vibration tube 61 in the steady excited state.

Rotating force around original axis 66 can be strongly suppressed by housing 6 of a Coriolis mass flowmeter that has a far larger torsion stiffness (torsion stiffness = $GIp = G\pi d^4/32$ , stiffness increases proportional to the fourth power of the diameter) compared with that of vibration tube 61.

As described above, enhanced isolation of vibration provides the following merits:

(1) A Coriolis mass flowmeter immune to external vibration noise can be obtained because the Q value of the internal vibration system can be made high, and even if external noise is applied, the influence of the noise is relatively low and vibration is stable;

(2) Since stable excitation can be implemented with less energy, a Coriolis mass flowmeter of low current consumption can be obtained;

(3) If dissipation of vibration energy to the outside changes or the dissipation between the upstream and downstream sides of vibration tube 61 becomes unbalanced, the internal vibration system is affected and the zero and span are changed by it.

Since vibration is always confined internally in the present invention, the above influence or change are not a concern, and thus a highly accurate Coriolis mass flowmeter can be obtained.

Figure 53 shows a drawing for explaining the configuration of the essential parts of the eighteenth embodiment of the present invention and is an embodiment for claim 13. Vibration sensors 68 and 69 are provided at the other ends of vibration arms 71 and 72, respectively. By providing vibration sensors 68 and 69 near the ends of vibration arms 71 and 72 respectively on the opposite side of original axis 66 to vibration tube 61, vibration can be detected in the optimum positions.

Vibration can be measured in the largest-amplitude places in the vibration system by positioning vibration sensors at the ends of vibration arms 71 and 72.

Also, the phase difference generated by the Coriolis force becomes very large.

Actually, as a result of comparison of the embodiment shown in Figure 34 with the embodiment shown in Figure 53 (corresponding to claim 14) in experiments, the following result is obtained as an example:

Ratio of sensor amplitude/driving amplitude is:

0.8 for the embodiment shown in Figure 34 and 3.5 for the embodiment shown in Figure 53.

Generated phase difference (in mrad) is:

8.8 for the embodiment shown in Figure 34 and 37.5 for the embodiment shown in Figure 53.

As shown above, values that are four or more times larger are observed compared with the embodiment shown in Figure 34 either in amplitude ratio or in generated phase difference.

As a result,

(1) If the measured amplitude is large, the S/N ratio is improved. On the contrary, if it is sufficient to obtain the measured amplitude at the same level as the conventional one, oscillating force can be made smaller and a Coriolis mass flowmeter of low power consumption can be obtained.

The smaller the maximum amplitude, the smaller the oscillation energy and the smaller the leakage to outside, and thus isolation of vibration becomes easier, allowing a stable and highly accurate Coriolis mass flowmeter to be obtained.

(2) If the generated phase difference is large, signal processing in the signal conversion section becomes easy. That is, a Coriolis mass flowmeter, having a stable and highly accurate performance using only simple and low-cost signal processing circuits, can be obtained.

On the contrary, if only signal processing performance equivalent to conventional meters is needed, a Coriolis mass flowmeter that can measure down to the low-flow region where generated phase difference is small in a stable manner or that can measure the mass flow of gases whose generated phase differences are originally small, can be obtained.

Since both the amplitude and phase difference of this embodiment are four or more times higher than the conventional ones, the embodiment has a great merit and provides a dramatic improvement.

Figures 54, 55, 56, and 57 show drawings for explaining operations in the essential parts of the nineteenth embodiment of the present invention and are also drawings for explaining the vibrating operation in claim 14. In the embodiment shown in these drawings, oscillator 67 oscillates vibration tube 61 in the second or a higher-order oscillation mode. These drawings are the result of modal analysis of the embodiment shown in Figure 53 using the finite element method with shell elements.

Figure 54 is a perspective view of the embodiment. Figure 55 is a projection drawing in the X direction of the embodiment shown in Figure 54. Figure 56 is a projection drawing in the Y direction of the embodiment shown in Figure 54. Figure 57 is a projection drawing in the Z direction of the embodiment shown in Figure 54. In these drawings, both of vibration-tube shapes, 61D in initial position D and 61E in maximum deformed position E, are indicated.

These drawings show the third-order mode resonance states of the embodiment shown in Figure 53 and the resonance frequency is 267 Hz.

Although, if the vibration system is self-excited, the lowest-order vibration mode is likely to be generated normally, the vibration system is self-excited so that the third-order mode vibration is excited by adjusting oscillator 67 in this embodiment.

In addition, the first-order mode resonance frequency in the embodiment shown in Figure 53 is 153 Hz and its vibration mode shape is as shown in Figures 58, 59, 60, and 61.

Figure 58 is a perspective view for operation in the first-order mode in the embodiment shown in Figure 53. Figure 59 is a projection drawing in the X direction of the embodiment shown in Figure 58. Figure 60 is a projection drawing in the Y direction of the embodiment shown in Figure 58. Figure 61 is a projection drawing in the Z direction of the embodiment shown in Figure 58. In these drawings, both of vibration-tube shapes, 61D in initial position D and 61E in maximum deformed position E, are indicated.

In Figures 58, 59, 60, and 61, the entire vibration system deforms in the +Z direction. This is not the oscillation on a circumference. Since oscillating forces are directly applied to fixed point 62 and 63, large forces in the X and Z directions are applied to these points.

The second-order mode resonance frequency in the embodiment shown in Figure 53 is 250 Hz and its vibration mode shape is as shown in Figures 62, 63, 64, and 65.

Figure 62 is a perspective view for operation in the second-order mode in the embodiment shown in Figure 53. Figure 63 is a projection drawing in the X direction of the embodiment shown in Figure 62. Figure 64 is a projection drawing in the Y direction of the embodiment shown in Figure 62. Figure 65 is a projection drawing in the Z direction of the embodiment shown in Figure 62. In these drawings, both of vibration-tube shapes, 61D in initial position D and 61E in maximum deformed position E, are indicated.

In Figures 62, 63, 64, and 65, deformation in the Z direction of vibration tube 61 is reversed between positive and negative values in the vicinity of the vibration tube center. Since deformation of vibration tube 61 itself is small, generation of the Coriolis force is also small, and thus this mode is not so practical.

The fourth-order mode resonance frequency in the embodiment shown in Figure 53 is 397 Hz and its vibration mode shape is as shown in Figures 66, 67, 68, and 69.

Figure 66 is a perspective view for operation in the fourth-order mode in the embodiment shown in Figure 53. Figure 67 is a projection drawing in the X direction of the embodiment shown in Figure 66. Figure 68 is a projection drawing in the Y direction of the embodiment shown in Figure 66. Figure 69 is a projection drawing in the Z direction of the embodiment shown in Figure 66. In these drawings, both of vibration-tube shapes, 61D in initial position D and 61E in maximum deformed position E, are indicated.

In Figures 66, 67, 68, and 69, although deformation of the vibration tube takes a complex shape, the deformation does not affect the excitation mode so seriously because the resonance frequency is high.

As a result, excitation in the second-, third-, or a higher-order mode provides the following merits:

(1) It is easy to set the exciting frequency higher. Thus, a Coriolis mass flowmeter that is not easily affected by vibration noise in high frequency excitation can be obtained, while the flowmeter is likely to be affected by field vibration noise in low frequency vibration.
(2) Resonance frequencies in the excitation mode and in a vibration mode generated by the Coriolis force can be brought near to each other.
In the embodiment shown in Figure 53, the driving frequency is 267 Hz and is near to 250 Hz of the resonance frequency in the Coriolis approximation mode. In the following equation, since P = 1.068 and Q = 1000, the magnification factor G becomes large such as G = 6.7 and the generated phase difference is also large:
where, magnification factor $G = (1 - P^2)/((1 - P^2)^2 + (P/Q))$
and P = (driving frequency)/(resonance frequency in Coriolis approximation mode).
(3) If the generated phase difference is large, signal processing in the signal conversion section becomes easy. That is, a Coriolis mass flowmeter, having a stable and highly accurate performance using only simple and low-cost signal processing circuits, can be obtained.

On the contrary, if only signal processing performance equivalent to conventional meters is needed, a Coriolis mass flowmeter that can measure down to the low-flow region where generated phase differences are small in a stable manner or can measure the mass flow of a gas whose phase difference is originally small, can be obtained.

Figures 70, 71, and 72 show drawings explaining the configuration of the essential parts of the twentieth embodiment of the present invention, and indicate an embodiment for claim 15.

Figure 70 is a plane view of the embodiment. Figure 71 is a front view of the embodiment shown in Figure 70. Figure 72 is a side view of the embodiment shown in Figure 70.

Vibration compensator 81 is provided inside housing 6. In vibration compensator 81, vibration tube 61, oscillator 67 and vibration sensors 68 and 69 are provided. Figure 72 shows an example in which coils 671, 681, and 691 and magnets 672, 682, and 692 are used for oscillator 67 and vibration sensors 68 and 69.

Vibration compensator 81 is provided in parallel with original axis 66, long in the above parallel direction, and both its ends are fixed to and supported by the ends of vibration tube 61.

In the above configuration, as shown in Figure 72, coil 671 and magnet 672 repel each other with forces $F_1$ and $F_2$ when oscillator 67 is actuated. With these forces, vibration tube 61 and vibration arms 71 and 72 rotate clockwise in Figure 72 taking the vicinity of the original axis as the center as shown by $T_1$ and $T_3$.

While, vibration compensator 81 rotates counterclockwise, counter to the rotation of vibration tube 61 and vibration arms 71 and 72 as shown by $T_2$ and $T_4$ by the reactive forces of the above.

Since vibration tube 61 is connected with vibration compensator 81, the clockwise forces and the counterclockwise forces cancel each other at fixed points 62 and 63 that are the joined parts of them. This reduces such force components around the original axis, and is such that the rotating component around original axis 66 does not leak out of vibration compensator 81.

Since vibration compensator 81 is provided in housing 6, vibration tube 61, vibration arms 71 and 72, vibration sensors 68 and 69 are acted on by forces in the opposite direction of forces that act on compensator 81, via oscillator 67. That is, inversely rotating vibrations around original axis 66 are generated.

At fixed points 62 and 63 where vibration tube 61 and vibration compensator 81 are joined, forces opposite to each other act and cancel each other, forming the node of vibration at these points. In such a manner, since not only the transverse component but also the rotating component around original axis 66 can be suppressed, isolation of vibration can further be enhanced.

As described above, enhanced isolation of vibration provides the following merits:

(1) A Coriolis mass flowmeter immune to external vibration noise can be obtained because the Q value of the internal vibration system can be made high, and even if external noise is applied, the influence of the noise is relatively low and vibration is stable;
(2) Since stable excitation can be implemented with less energy, a Coriolis mass flowmeter of low current consumption can be obtained;
(3) If dissipation of vibration energy to the outside changes or the dissipation between the upstream and downstream sides becomes unbalanced, the internal vibration system is affected and the zero and span are changed by it.
   Since vibration is always confined internally in the present invention, the above influence or change are not a concern, and thus a highly accurate Coriolis mass flowmeter can be obtained.
(4) Internal vibration can continue stable excitation by supporting the vibration system with vibration compensator 81 even if stresses are applied from outside. That is, a stable and highly accurate Coriolis mass flowmeter that is not easily affected by piping stresses and/or thermal stresses can be obtained.

Figure 73 shows a drawing for explaining the configuration of the essential parts of the twenty-first embodiment of the present invention and also indicates an embodiment for claim 16.

In this embodiment, flexible structures 91 that absorb expansion or contraction in the direction of and rotational vibration around original axis 66 are provided at the parts of vibration tube 61 between upstream fixed point 62 and upstream flange 2 and between downstream fixed point 63 and downstream flange 2.

As a result,

(1) Absorption of thermal expansion becomes possible and thus, a Coriolis mass flowmeter that can perform highly accurate measurement in a stable manner over a wide temperature range can be obtained.
(2) Even if a piping stress is applied, flexible structures 91 can absorb it and prevent it from affecting the inside. Accordingly, a stable and highly accurate Coriolis mass flowmeter can be obtained.

**Claims**

1. A Coriolis mass flowmeter that is provided with a vibration tube through which a measuring fluid is passed, and operated by deforming and vibrating the said vibration tube using a Coriolis force generated by the flow of the said measuring fluid and the angular vibration of the said vibration tube;

characterized by the said vibration tube performing simple harmonic oscillation or circular motion on circumferences away from each point of the original axis at predetermined distances, and

the said original axis being taken as a straight line connecting the upstream fixed point and downstream fixed point of the said vibration tube.

2. A Coriolis mass flowmeter in accordance with claim 1,

provided with at least two oscillators that are mounted at each predetermined angle around the said original axis in a non-contact manner with the said vibration tube so that the said vibration tube performs simple harmonic oscillation or circular motion.

3. A Coriolis mass flowmeter in accordance with claim 1 or 2,

provided with an oscillator composed of a rotating body and a driving object so that the said vibration tube performs simple harmonic oscillation or circular motion;
the said rotating body, to which an approximately middle point of the said vibration tube is fixed at a predetermined radial distance away from the said original axis taken as the center axis, being moved along or rotated on a circumference of the said radial distance around the said center axis, and
the said driving object being used to drive the said rotating body.

4. A Coriolis mass flowmeter in accordance with any of claims 1 to 3,

provided with a vibration tube curved and arranged in advance in a position where the said simple harmonic oscillation or circular motion is carried out in a non-excited state.

5. A Coriolis mass flowmeter in accordance with any of claims 1 to 3,

provided with an oscillator that applies an oscillation force component and a predetermined bias force component to the said vibration tube so that the said vibration tube, which is a straight tube in a non-excited state, is located on circumferences away from each point of the said original axis by predetermined distances respectively in an excited state.

6. A Coriolis mass flowmeter in accordance with any of claims 1 to 5,

provided with a counter weight joined to the said vibration tube in a position opposite to the center of gravity of the entire vibration system composed of the said vibration tube and the said oscillator about the said original axis, so that the said center of gravity does not move in an excited state.

7. A Coriolis mass flowmeter in accordance with any of claims 1 to 6,

provided with vibration compensators that cancel out a rotational component generated around the said original axis in the vicinity of both fixed points of the said vibration tube accompanied by the vibration of the said vibration tube, and construct the vibration nodes at the said points.

8. A Coriolis mass flowmeter in accordance with any of claims 1 to 7,

provided with a torsion stiffness structure joined to both fixed points of the said vibration tube so that torsional vibration does not leak to the outside.

9. A Coriolis mass flowmeter in accordance with claim 1,

provided with one vibration tube that performs simple harmonic oscillation on circumferences away from each point of the original axis by predetermined distances, that has at least one gentle curve and is line-symmetrical about the center line equidistant from the upstream fixed point and downstream fixed point, the said original axis being taken as a straight line connecting the said upstream fixed point with the said downstream fixed point.

**10.** A Coriolis mass flowmeter in accordance with claim 9,

provided with a vibration arm crossing orthogonal to the said original axis or the said vibration tube, one end of the arm being fixed to the said vibration tube and the other end of the arm being placed on the opposite side of the said vibration tube about the said original axis;
wherein the center of gravity of the entire vibration system is placed on the said original axis by adjusting the mass distributions and shapes of the said vibration tube and the said vibration arm.

**11.** A Coriolis mass flowmeter in accordance with claim 9 or claim 10,

provided with at least two vibration arms crossing orthogonal to the said original axis or the said vibration tube, one end of each of the vibration arms being fixed to the said vibration tube and the other end of each of the vibration arms being placed on the opposite side of the said vibration tube in the symmetrical positions about the said center line;
wherein the center of gravity of the entire vibration system is placed in the position of the vibration node for exciting oscillation by adjusting the mass distributions, shapes, and stiffness of the said vibration tube and the said vibration arms and also adjusting the distance between the said two vibration arms.

**12.** A Coriolis mass flowmeter in accordance with any of claims 9 to 11,

provided with at least two vibration arms crossing orthogonal to the said original axis or the said vibration tube, one end of each of the vibration arms being fixed to the said vibration tube and the other end of each of the vibration arms being placed on the opposite side of the said vibration tube in the symmetrical positions about the said center line;
wherein a force component orthogonal to the said original axis caused by an oscillating force from the oscillator is prevented from being generated, by making the force generated at both fixed points of the said vibration tube in the steady excited state be only the torsional component around the said original axis, by adjusting the mass distributions, shapes, and stiffness of the said vibration tube and the said vibration arms and also adjusting the distance between the said two vibration arms.

**13.** A Coriolis mass flowmeter in accordance with any of claims 9 to 12, provided with

a vibration arm or arms crossing orthogonal to the said original axis or the said vibration tube, one end of the arm or arms being fixed to the said vibration tube and the other end of the arm or arms being placed on the opposite side of the said vibration tube about the said original axis, and
a vibration sensor or sensors provided at the other end or ends of the said arm or arms.

**14.** A Coriolis mass flowmeter in accordance with any of claims 9 to 13, provided with

an oscillator to excite the said vibration tube in the second-order or a higher-order oscillation mode.

**15.** A Coriolis mass flowmeter in accordance with any of claims 9 to 14, provided with

a vibration compensator provided in parallel with the said original axis, both ends of which are fixed to and supported by both ends of the said vibration tube respectively, and
an oscillator and vibration sensors provided between the said compensator and the said vibration tube.

**16.** A Coriolis mass flowmeter in accordance with claim 15, provided with

flexible structures that absorb expansion or contraction of the vibration tube in the direction of the said original axis and rotational oscillation around the said original axis, provided at the parts of the said vibration tube between the said upstream fixed point and the upstream flange and between the said downstream fixed point and the downstream flange.

# FIG. 1
[PRIOR ART]

4:VIBRATION SENSOR
5:VIBRATION SENSOR
2:FLANGE
2:FLANGE
3:OSCILLATOR 6:HOUSING
1:VIBRATION TUBE

# FIG. 2
[PRIOR ART]

1:VIBRATION TUBE
4:VIBRATION SENSOR
5:VIBRATION SENSOR
2:FLANGE
2:FLANGE
1:VIBRATION TUBE
7:VIBRATION SENSOR
3:OSCILLATOR
6:VIBRATION SENSOR

# FIG. 3
[PRIOR ART]

7.5kgf
1mm
7.5kgf
1:VIBRATION TUBE

# FIG. 4
[PRIOR ART]

# FIG. 5
[PRIOR ART]

# FIG. 6

12:UPSTREAM FIXED POINT
16:VIBRATION SENSOR
15:OSCILLATOR
17:VIBRATION SENSOR
2:FLANGE

FL Flow

→a  →b  →c

Z
X
Y

2:FLANGE   ↳a  ↳b  ↳c   13:DOWNSTREAM FIXED
                              POINT SENSOR
14:ORIGINAL        11:VIBRATION TUBE  6:HOUSING
AXIS

# FIG. 7

Z
X→Y

14:ORIGINAL AXIS
11:VIBRATION TUBE

R(b)

B     A     C

# FIG. 8

Z
X→Y

14:ORIGINAL AXIS
11:VIBRATION TUBE

R(a) or
R(c)

B     A     C

FIG. 9

FIG. 10

# FIG. 11

151-1:EXCITATION COIL
14:ORIGINAL AXIS
Z
X ⊙ → Y

R θ

151-3:EXCITATION COIL

152:MAGNETIC COMPONENT

15:OSCILLATOR

11:VIBRATION TUBE

D

151-2:EXCITATION COIL

# FIG. 12

Z
X ⊙ → Y

14:ORIGINAL AXIS
11:VIBRATION TUBE

151-4:EXCITATION COIL

θ

D

15:OSCILLATOR

152:MAGNETIC COMPONENT

D

151-5:EXCITATION COIL

## FIG. 13

21:OSCILLATOR
14:ORIGINAL AXIS
13
211:DISK
212:MOTOR
R
12
11:VIBRATION TUBE

## FIG. 14

12:UPSTREAM FIXED POINT
16:VIBRATION SENSOR
17:VIBRATION SENSOR
22:OSCILLATOR
13:DOWNSTREAM FIXED POINT
14:ORIGINAL AXIS
2:FLANGE
2:FLANGE
11:VIBRATION TUBE

FIG. 15

11: VIBRATION TUBE
A
B
C
D
Z
X
Y

FIG. 16

B
A
Z
X
Y
C
D
11: VIBRATION TUBE

FIG. 17

31: COUNTER WEIGHT
13
Z
X
Y
11: VIBRATION TUBE
32: JOINT ARM
14: ORIGNAL AXIS
12

# FIG. 18

A'
31:COUNTER WEIGHT

C'        B'

Z
X → Y

32:JOINT ARM

14:ORIGINAL AXIS

11:VIBRATION TUBE

B        C

A

# FIG. 19

A'
31:COUNTER WEIGHT

C'        B'

13

B

31:COUNTER
WEIGHT

32:JOINT ARM

11:VIBRATION TUBE

Z
X
Y

C'        A'

B'

C

A

14:ORIGINAL AXIS

12

# FIG. 20

31:COUNTER WEIGHT

32:JOINT ARM

14:ORIGINAL AXIS

11:VIBRATION TUBE

# FIG. 21

14:ORIGINAL AXIS

13

41:VIBRATION COMPENSATOR

11:VIBRATION TUBE

12

41:VIBRATION COMPENSATOR

FIG. 22

14:ORIGINAL AXIS

B

R

A C

41:VIBRATION
COMPENSATOR

11:VIBRATION TUBE

13

12

41:VIBRATION COMPENSATOR

Z
X
Y

FIG. 23

43:OSCILLATOR
42:VIBRATION
COMPENSATOR

14:ORIGINAL AXIS

11:VIBRATION TUBE

E

42:VIBRATION
COMPENSATOR

Z
X
Y

43:OSCILLATOR

12:UPSTREAM FIXED POINT

# FIG. 24

6: HOUSING
51: TORSION STIFFNESS STRUCTURE
11: VIBRATION TUBE
2: FLANGE
2: FLANGE

# FIG. 25

6: HOUSING
51: TORSION STIFFNESS STRUCTURE
11: VIBRATION TUBE

# FIG. 26

14:ORIGINAL AXIS

52:TORSION STIFFNESS STRUCTURE

11:VIBRATION TUBE

2:FLANGE

2:FLANGE

# FIG. 27

52:TORSION STIFFNESS
STRUCTURE

11:VIBRATION TUBE

# FIG. 28

53:TORSION STIFFNESS
STRUCTURE

11:VIBRATION TUBE

## FIG. 29

## FIG. 30

FIG. 31

Z
X→Y

66:ORIGINAL AXIS
R(b)
61:VIBRATION TUBE
B
A
C

FIG. 32

Z
X→Y

R(a) or
R(c)
66:ORIGINAL AXIS
61:VIBRATION TUBE
B
A
C

FIG. 33

Z
X
Y

63
B
66:ORIGINAL AXIS
C
A
62
61:VIBRATION TUBE

# FIG. 34

64:CENTER
LINE   65:GENTLE 69:VIBRATION
CURVE   SENSOR

68:VIBRATION
SENSOR

61:VIBRATION
TUBE

66:ORIGINAL
AXIS

67:
OSCILLATOR

71:VIBRATION
ARM

63:DOWNS TREAM
FIXED POINT

62:UPSTREAM
FIXED POINT

72:VIBRATION
ARM

# FIG. 35

Y

62

61D

F ARROW

X

Z

71

61E

D:INITIAL POSITION

E:MAXIMUM
DEFORMED
POSITION

72

63

FIG. 36

D:INITIAL POSITION
61D
G:VAIBRATION NODE

Y
X
Z
F:ARROW
E:MAXIMUM DEFORMED POSITION

FIG. 37

62
71
61D
D:INITIAL POSITION
72
63
Y
X
Z
61E
E:MAXIMUM DEFORMED POSITION

FIG. 38

D:INITIAL POSITION
E:MAXIMUM DEFORMED POSITION
61D, 61E
63
Y
X
Z
62
71
72

FIG. 39

G:VIBRATION NODE
71, 72:VIBRATION ARM
61E
61D
63
F:ARROW
62

FIG. 40

61
71, 72:VIBRATION ARM
71, 72
F:ARROW

FIG. 41

62
61E
63
61D
71, 72:VIBRATION ARM

# FIG. 42

# FIG. 43

# FIG. 44

# FIG. 45

71    61D    72    63
Y X
62
Z
61E

# FIG. 46

61D, 61E
Y    62
X    63
Z
71    72

# FIG. 47

Y
62
X
Z
F : ARROW
61D
DEFORMED
INITIAL
71
ROTX
FY
72
63
FZ

# FIG. 48

F ARROW

INITIAL POSITION

DEFORMED POSITION

Y
Z X

DEFORMED

# FIG. 49

61D: INITIAL POSITION

62    71    72    63

Y X
Z

61E: DEFORMED POSITION

# FIG. 50

61D, 61E

Y 62    63
X
Z

71    72

# FIG. 51

67:OSCILLATOR 10g

68:VIBRATION
SENSOR 6g

69:VIBRATION
SENSOR 6g

62

Y

X

Z

11

71

72

63

M

M

148mm

148mm

500mm

# FIG. 52

# FIG. 53

FIG. 54

FIG. 55

FIG. 56

FIG. 57

FIG. 58

FIG. 59

FIG. 60

FIG. 61

41

FIG. 62

FIG. 63

FIG. 64

FIG. 65

FIG. 66

FIG. 67

## FIG. 68

## FIG. 69

## FIG. 70

# FIG. 71

FLO:FLOW

67:OSCILLATOR

61:VIBRATION TUBE

66:ORIGINAL AXIS

6:HOUSING

Y
X
Z

81:VIBRATION COMPENSATOR

68:VIBRATION SENSOR

69:VIBRATION SENSOR

# FIG. 72

F1

67:OSCILLATOR

F2    671:COIL

T1

61:VIBRATION TUBE

71, 72:VIBRATION ARM

T2

81:VIBRATION COMPENSATOR

682, 692:MAGNET

68, 69:VIBRATION SENSOR

T4

681, 682:COIL

T3

6:HOUSING

Z
X    Y

# FIG. 73

91:FLEXIBLE STRUCTURE
61:VIBRATION TUBE
66:ORIGINAL AXIS
65:GENTLE CURVE
2:FLANGE
6:HOUSING
81:VIBRATION COMPENSATOR
91:FLEXIBLE STRUCTURE
2:FLANGE
62:UPSTREAM FIXED POINT
67:OSCILLATOR
63:DOWNSTREAM FIXED POINT
68:VIBRATION SENSOR
72:VIBRATION ARM
71:VIBRATION ARM
69:VIBRATION SENSOR

EP 0 905 488 A2